# EUROPÄISCHE PATENTANMELDUNG

(11) **EP 4 080 428 A1**
(43) Veröffentlichungstag der Anmeldung: **26.10.2022**
(21) Anmeldenummer: 22169434.2
(22) Anmeldetag: 22.04.2022
(51) Int. Cl.: G06Q 10/04, G06Q 50/06

(54) **SYSTEM ZUR VERRINGERUNG EINES CO2-AUSSTOSSES BEI DER ENERGIEVERSORGUNG VON GEBÄUDEN**

(30) Priorität: 23.04.2021 DE 202021102194 U
(71) Anmelder: Zacharias, Horst, 31789 Hameln (DE)
(72) Erfinder: Zacharias, Horst, 31789 Hameln (DE)
(74) Vertreter: RGTH

(57) **Zusammenfassung**

Um ein System zur Verringerung eines CO₂-Ausstoßes bei der Energieversorgung von Gebäuden bereitzustellen, mit welchen insbesondere bei Bestandsgebäuden nicht realisierte Einsparpotenziale identifiziert werden können, und mit welchen eine Verringerung des CO₂-Ausstoßes bei im Wesentlichen unverändertem Komfort für die Nutzer der Gebäude ermöglicht wird, wird ein System zur Verringerung eines CO₂-Ausstoßes bei der Energieversorgung von Gebäuden (10, 10a) vorgeschlagen, umfassend mindestens einen in einem Gebäude (10, 10a) angeordneten Messdatenaufnehmer (11, 11a, 11b) eingerichtet zur Ermittlung eines Energieverbrauchs, ferner umfassend eine Datenverarbeitungsvorrichtung (16), welche ausgebildet ist, für einen Ermittlungszeitraum auf Basis eines ermittelten Energieverbrauchs einen CO₂-Ausstoß zu ermitteln, wobei ferner vorgesehen ist, dass die Datenverarbeitungsvorrichtung (16) ausgebildet ist, Maßnahmen (20, 20a) zu ermitteln, welche eine Verringerung des CO₂-Ausstoßes bei der Energieversorgung des Gebäude (10, 10a) bewirken.

## Beschreibung

Die vorliegende Erfindung betrifft ein System zur Verringerung eines CO₂-Ausstoßes bei der Energieversorgung von Gebäuden, umfassend mindestens einen in einem Gebäude angeordneten Messdatenaufnehmer eingerichtet zur Ermittlung eines Energieverbrauchs, ferner umfassend eine Datenverarbeitungsvorrichtung, welche ausgebildet ist, für einen Ermittlungszeitraum auf Basis eines ermittelten Energieverbrauchs einen CO₂-Ausstoß zu ermitteln.

Ferner betrifft die vorliegende Erfindung ein Verfahren zur Verringerung eines CO₂-Ausstoßes bei der Energieversorgung von Gebäuden durchführbar mit einem System zur Verringerung eines CO₂-Ausstoßes bei der Energieversorgung von Gebäuden.

### Technologischer Hintergrund

Vor dem Hintergrund der Klimaerwärmung wird derzeit intensiv nach Einsparpotenzialen von Treibhausgasen gesucht. Dabei hat sich herausgestellt, dass ein besonders großes Einsparpotenzial von Treibhausgasen, insbesondere von CO₂, bei der Energieversorgung von Gebäuden liegt.

Ein Großteil der Bestandsgebäude ist zum Teil mehrere Jahrzehnte alt. Entsprechend alt sind auch die Energieerzeugungs- beziehungsweise Energieversorgungsvorrichtungen dieser Gebäude. Rund 70 % des Energieverbrauchs eines Gebäudes entfällt dabei auf die Beheizung beziehungsweise die Warmwasserbereitung. In diesen Bereichen sind somit noch große Einsparpotenziale vorhanden. Zudem werden die politischen Vorgaben für die CO₂-Emissionen im Gebäudesektor ständig stärker, sodass in den nächsten Jahren die CO₂-Emissionen zum Teil drastisch reduziert werden müssen.

Aus der US 2016/0370771 A1 sind ein System und ein Verfahren zur Überwachung der Energieeffizienz eines Gebäudes bekannt. Das System zielt ab auf die Reduzierung des Wasser- und Stromverbrauchs sowie des Energieverbrauchs durch Heizsysteme. Von Sensoren zur Messung des Strom-, Brennstoff- und Wasserverbrauchs ermittelte Daten werden verwendet, um einem Benutzer über ein Userinterface Informationen in Form von Mittelwerten zu abweichendem Benutzerverhalten, aktuellen Verbrauchsdaten und Einsparpotenziale anzuzeigen.

Aus der US 2012/0173456 A1 ist ein System zur Verbesserung der Energieeffizienz eines Gebäudes bekannt. Gemessene Daten zum Strom-, Gas- und Wasserverbrauch werden über Smartmeter erfasst. Die erfassten Daten werden an eine Analyse- und Simulationseinheit übertragen. Die Analyse- und Simulationseinheit kann die Energieeffizienz des Gebäudes unter veränderter Nutzung und/oder mit verändertem Equipment simulieren.

Die US 2013/0060471 A1 offenbart ein System und ein Verfahren zur Bestimmung der energetischen und thermischen Eigenschaften eines Gebäudes in Echtzeit. Aus Messungen der Innen- und Außentemperatur bei Tag und bei Nacht sowie des Gesamtenergieverbrauchs des Gebäudes werden charakteristische Parameter, zum Beispiel der Wärmetransferkoeffizient oder CO₂-Zertifikate für das Gebäude bestimmt.

Die US 2007/0239317 A1 offenbart ein Verfahren zum Energiemanagement, insbesondere eines Heizsystems, das eine künstliche Intelligenz nutzt, um einem Nutzer eine effiziente Lösung zum Energiemanagement und zur Verringerung des Energiebedarfs sowie zur Reduzierung von Kosten zur Verfügung zu stellen. Die künstliche Intelligenz kann Vorschläge zur Reduzierung des Energieverbrauchs machen und diese an ein Display eines Nutzers übermitteln.

Im Stand der Technik sind jedoch keine Systeme beziehungsweise Verfahren bekannt, mit welchen gezielt CO₂-Einsparpotenziale bei Bestandsgebäuden bei unverändertem Komfort für den Nutzer des Gebäudes realisiert werden können.

### Darstellung der Erfindung: Aufgabe, Lösung, Vorteile

Der vorliegenden Erfindung liegt die Aufgabe zugrunde, ein System und ein Verfahren zur Verringerung eines CO₂-Ausstoßes bei der Energieversorgung von Gebäuden bereitzustellen, mit welchen insbesondere bei Bestandsgebäuden nicht realisierte Einsparpotenziale identifiziert werden können, und mit welchen eine Verringerung des CO₂-Ausstoßes bei im Wesentlichen unverändertem Komfort für die Nutzer der Gebäude ermöglicht wird.

Zur Lösung der der Erfindung zugrundeliegenden Aufgabe wird ein System zur Verringerung eines CO₂-Ausstoßes bei der Energieversorgung von Gebäuden vorgeschlagen, umfassend mindestens einen in einem Gebäude angeordneten Messdatenaufnehmer eingerichtet zur Ermittlung eines Energieverbrauchs, ferner umfassend eine Datenverarbeitungsvorrichtung, welche ausgebildet ist, für einen Ermittlungszeitraum auf Basis eines ermittelten Energieverbrauchs einen CO₂-Ausstoß zu ermitteln, wobei die Datenverarbeitungsvorrichtung ferner ausgebildet ist, Maßnahmen zu ermitteln, welche eine Verringerung des CO₂-Ausstoßes bei der Energieversorgung des Gebäudes bewirken.

Bei der Energieversorgung kann es sich um eine Stromversorgung, Wärmeversorgung, Wasserversorgung oder Kälteversorgung handeln. Ferner kann es sich bei der Energieversorgung um eine Brennstoffversorgung mit gasförmigen, flüssigen oder festen Brennstoffen handeln. Insbesondere kann die Brennstoffversorgung eine Gas-, Öl-, oder Pelletversorgung sein.

Das System umfasst mindestens einen in einem Gebäude, insbesondere in einem Bestandsgebäude, angeordneten Messdatenaufnehmer, welcher zur Ermittlung eines Energieverbrauches eingerichtet ist. Während eines Ermittlungszeitraums ist vorgesehen, dass der mindestens eine Messdatenaufnehmer Daten zum Energieverbrauch ermittelt und an eine Datenverarbeitungsvorrichtung des Systems übermittelt.

Die Datenverarbeitungsvorrichtung kann dabei in dem Gebäude selbst, insbesondere in dem Bestandsgebäude, angeordnet sein. Darüber hinaus ist es auch möglich, dass die Datenverarbeitungsvorrichtung eine Datenverarbeitungsvorrichtung eines Dienstleisters, beispielsweise eines Messstellendienstleisters, eines Energieerzeugers, eines Energielieferanten oder eines Netzbetreibers, ist.

Die Datenverarbeitungsvorrichtung ermittelt auf Basis des über den Ermittlungszeitraum gemessenen Energieverbrauchs einen dem Energieverbrauch zugeordneten CO₂-Ausstoß. Auf Basis des ermittelten Energieverbrauchs und des aus diesem ermittelten CO₂-Ausstoßes ermittelt die Datenverarbeitungsvorrichtung sodann Maßnahmen, welche, bei einer Umsetzung, eine Verringerung des CO₂-Ausstoßes bei der Energieversorgung des Gebäudes bewirken.

Durch die Ermittlung dieser Maßnahmen und deren Umsetzung, beispielsweise durch einen Nutzer des Gebäudes, einen Gebäudeeigentümer, einen Messstellendienstleister, einen Energieerzeuger, einen Energielieferanten oder einen Netzbetreiber, können nicht realisierte Einsparpotenziale für den CO₂-Ausstoß genutzt werden.

Das System kann ausgebildet sein, dass nach der Ermittlung eines CO₂-Ausstoßes für einen Ermittlungszeitraum und der Ermittlung von Maßnahmen zur Verringerung des CO₂-Ausstoßes, in einem oder mehreren folgenden Ermittlungszeiträumen erneut der CO₂-Ausstoß ermittelt wird, und dass weitere Maßnahmen zur Verringerung des CO₂-Ausstoßes von der Datenverarbeitungsvorrichtung ermittelt werden. Insbesondere kann das System die Ermittlung von Maßnahmen kontinuierlich für aufeinanderfolgende Ermittlungszeiträume durchführen.

Bevorzugt ist vorgesehen, dass Messdatenaufnehmer in mehreren Gebäuden angeordnet sind, wobei die Messdatenaufnehmer zur Ermittlung eines Energieverbrauchs eingerichtet sind, wobei die Maßnahmen eine Verringerung des CO₂-Ausstoßes bei der Energieversorgung der mehreren Gebäude bewirken.

Das System kann somit zum einen ausgebildet sein, den CO₂-Ausstoß bei der Energieversorgung eines einzigen Gebäudes zu verringern. Darüber hinaus ist es aber auch möglich, dass mittels der von der Datenverarbeitungsvorrichtung ermittelten Maßnahmen der Gesamt-CO₂-Ausstoß bei der Energieversorgung mehrerer Gebäude verringert werden kann.

Insbesondere bei der Verwendung des Systems für mehrere Gebäude können Synergieeffekte genutzt werden und die Effizienz bei der Energieversorgung der mehreren Gebäude kann gesteigert werden. Ein Synergieeffekt besteht darin, dass ein Ausgleich von Angebot und Nachfrage an Energie erfolgen werden kann. Wird beispielsweise der von einer Photovoltaik-Anlage eines Gebäudes der mehreren Gebäude erzeugte Strom nicht vollständig von dem Gebäude, welches die Photovoltaikanlage aufweist, verbraucht, so kann die von der Datenverarbeitungsvorrichtung ermittelte Maßnahme in einer Nutzung des überschüssigen Stroms für die Energieversorgung der anderen Gebäude bestehen.

Ferner ist bevorzugt vorgesehen, dass die Maßnahmen bei einem im Wesentlichen unveränderten Wärmeverbrauch eine Verringerung des CO₂-Ausstoßes bewirken. Unter einem unveränderten Wärmeverbrauch wird bevorzugt eine unveränderte Wärmeabgabe für die Beheizung und die Warmwasserbereitung verstanden. Da die Wärmeabgabe unverändert bleibt, ergeben sich für den Nutzer keine Komforteinbußen.

Der größte Teil des Energieverbrauchs bei Gebäuden und des damit verbundenen CO₂-Austosses entfällt auf die Beheizung und auf die Warmwasserbereitung. Es kann daher vorgesehen sein, dass die Maßnahmen bei einem im Wesentlichen unveränderten Wärmeverbrauch eine Verringerung des CO₂-Ausstoßes bewirken. Mit anderen Worten kann bei gleichbleibendem Wärmeverbrauch für die Beheizung und die Warmwasserbereitung des Gebäudes der damit verbundene CO₂-Ausstoß verringert werden. Für den Nutzer des Gebäudes eröffnen sich somit CO₂-Einsparpotenziale, ohne dass der Komfort für den Nutzer beeinträchtigt wird.

Mit weiterem Vorteil kann vorgesehen sein, dass das Gebäude ein saniertes Gebäude ist, und/oder dass das Gebäude eine sanierte Gebäudehülle aufweist.

Mit anderen Worten ist das Gebäude nach Energieeffizienz- und Klimaschutz-Gesichtspunkten saniert. An dem Gebäude können somit bereits Dämmmaßnahmen an der Gebäudehülle durchgeführt worden sein. Insbesondere bei bereits sanierten Gebäuden, bevorzugt bei sanierten Bestandsgebäuden, können noch große CO₂-Einsparpotenziale realisiert werden, welche mit bekannten Systemen nicht erfasst werden können. So weisen sanierte Gebäude nach der Sanierung oft noch überdimensionierte Energieerzeugungs- oder Wärmeerzeugungsvorrichtungen, wie beispielsweise Heizanlagen oder Heizkessel, auf. Durch Sanierung oder Austausch dieser überdimensionierten Energieerzeugungs- oder Wärmeerzeugungsvorrichtungen können weitere CO₂-Einsparpotenziale realisiert werden, welche durch die Sanierung des Gebäudes beziehungsweise der Gebäudehülle alleine nicht umgesetzt wurden.

Es ist jedoch auch möglich, dass das Gebäude kein saniertes Gebäude ist, und/oder dass das Gebäude keine sanierte Gebäudehülle aufweist. Dies bedeutet, dass das System zur Verringerung eines CO₂-Ausstoßes bei der Energieversorgung von Gebäuden eingesetzt wird, bevor eine Sanierung des Gebäudes oder der Gebäude stattgefunden hat.

Ferner bevorzugt kann vorgesehen sein, dass der Energieverbrauch ein Brennstoffverbrauch, insbesondere ein Erdgasverbrauch oder ein Ölverbrauch, und/oder ein Stromverbrauch und/oder ein Wärmeverbrauch ist.

Mit weiterem Vorteil kann vorgesehen sein, dass sich die Maßnahmen auf Maßnahmen betreffend eine Energieerzeugungsvorrichtung, bevorzugt einer Wärmeerzeugungsvorrichtung, und/oder auf Maßnahmen betreffend ein Verbrauchsverhalten eines Nutzers beziehen.

Insbesondere ältere, bevorzugt sanierte, Bestandsgebäude weisen oft noch überdimensionierte Energieerzeugungsvorrichtungen oder Wärmeerzeugungsvorrichtungen wie Heizanlagen oder Heizkessel auf. Dadurch, dass die von der Datenverarbeitungsvorrichtung ermittelten Maßnahmen eine Energieerzeugungsvorrichtung beziehungsweise eine Wärmeerzeugungsvorrichtung betreffen, können diese nicht realisierte Potenziale für die Verringerung des CO₂-Ausstoßes realisiert werden.

Darüber hinaus können CO₂-Einsparungen auch durch eine Änderung des Verbrauchsverhaltens eines Nutzers des Gebäudes erzielt werden. Es ist daher von besonderem Vorteil, wenn die Maßnahmen, welche von der Datenverarbeitungsvorrichtung ermittelt werden, sich auf eine Änderung eines Verbrauchsverhaltens eines Nutzers beziehen.

Die Maßnahmen können sich auch auf Maßnahmen betreffend eine Sanierung des Gebäudes oder der Gebäude beziehen. Insbesondere ist es möglich, dass die Datenverarbeitungsvorrichtung des Systems ausgebildet ist, für einen ersten Ermittlungszeitraum auf Basis eines ermittelten Energieverbrauchs einen CO₂-Ausstoß zu ermitteln, und erste Maßnahmen zur Verringerung des CO₂-Ausstoßes bei der Energieversorgung des Gebäudes oder der Gebäude zu ermitteln, welche eine Sanierung des Gebäudes oder der Gebäude bzw. der Gebäudehülle des Gebäudes oder der Gebäude betreffen. Die Datenverarbeitungsvorrichtung kann ferner ausgebildet sein, anschließend für einen zweiten Ermittlungszeitraum auf Basis eines ermittelten Energieverbrauchs einen CO₂-Ausstoß zu ermitteln, und zweite Maßnahmen zur Verringerung des CO₂-Ausstoßes bei der Energieversorgung des Gebäudes oder der Gebäude zu ermitteln, welche eine Energieerzeugungsvorrichtung, bevorzugt einer Wärmeerzeugungsvorrichtung, und/oder ein Verbrauchsverhalten eines Nutzers betreffen.

Umgekehrt ist es möglich, dass die Datenverarbeitungsvorrichtung des Systems ausgebildet ist, für einen ersten Ermittlungszeitraum auf Basis eines ermittelten Energieverbrauchs einen CO₂-Ausstoß zu ermitteln, und erste Maßnahmen zur Verringerung des CO₂-Ausstoßes bei der Energieversorgung des Gebäudes oder der Gebäude zu ermitteln, welche eine Energieerzeugungsvorrichtung, bevorzugt einer Wärmeerzeugungsvorrichtung, und/oder ein Verbrauchsverhalten eines Nutzers betreffen. Die Datenverarbeitungsvorrichtung kann ferner ausgebildet sein, anschließend für einen zweiten Ermittlungszeitraum auf Basis eines ermittelten Energieverbrauchs einen CO₂-Ausstoß zu ermitteln, und zweite Maßnahmen zur Verringerung des CO₂-Ausstoßes bei der Energieversorgung des Gebäudes oder der Gebäude zu ermitteln, welche eine Sanierung des Gebäudes oder der Gebäude bzw. der Gebäudehülle des Gebäudes oder der Gebäude betreffen.

Bevorzugt ist vorgesehen, dass die Datenverarbeitungsvorrichtung für die Ermittlung des CO₂-Ausstoßes, und/oder für die Ermittlung der Maßnahmen, mindestens einen Messwert einer Außentemperatur, bevorzugt mehrere regelmäßig ermittelte Messwerte der Außentemperatur, weiter bevorzugt einen Verlauf der Außentemperatur, in dem Ermittlungszeitraum berücksichtigt. Hierfür kann ein als Außentemperatursensor ausgebildeter Messdatenaufnehmer vorgesehen sein. Alternativ oder zusätzlich kann der Messwert, die Messwerte oder der Verlauf der Außentemperatur auch von einem Wetterdienst, beispielsweise über das Internet unter Angabe der Postleitzahl für das Gebäude, bezogen werden.

Durch die Einbeziehung eines oder mehrerer Messwerte der Außentemperatur, insbesondere des Verlaufs der Außentemperatur, können energetische Kenngrößen der Energieerzeugungsvorrichtung, bevorzugt der Wärmeerzeugungsvorrichtung, wie beispielsweise der Wirkungsgrad und/oder Nutzungsgrad, ermittelt werden. Auf Basis der Kenngrößen kann die Datenverarbeitungsvorrichtung dann Maßnahmen ermitteln, welche eine Optimierung der Kenngrößen bewirken.

Der Ermittlungszeitraum kann zwischen einem Tag und einem Jahr, bevorzugt zwischen einer Woche und einem Jahr, weiter bevorzugt zwischen einem Monat und sechs Monaten, betragen.

Weiter bevorzugt kann die Länge des Ermittlungszeitraum von einer vorbestimmten Spreizung der Außentemperatur abhängen. Die vorbestimmte Spreizung der Außentemperatur kann bspw. 5°, 10° oder 20°C betragen.

Nach Beginn des Ermittlungszeitraum wird, beispielsweise von der Datenverarbeitungsvorrichtung, der Verlauf der Außentemperatur überwacht. Entspricht die Differenz zwischen einem Maximal- und einem Minimalwert der gemessenen Außentemperatur der vorbestimmten Spreizung der Außentemperatur, so kann der Ermittlungszeitraum beendet werden, und die Datenverarbeitungsvorrichtung kann mit der Ermittlung der Maßnahmen beginnen.

Mit weiterem Vorteil kann vorgesehen sein, dass die Maßnahmen eine Sanierung und/oder einen Austausch, bevorzugt einer Komponente, der Energieerzeugungsvorrichtung, weiter bevorzugt der Wärmeerzeugungsvorrichtung, betreffen.

In einer Ausführungsform kann daher vorgesehen sein, dass die von der Datenverarbeitungsvorrichtung ermittelten Maßnahmen eine Neuinstallation und/oder eine Sanierung und/oder einen Austausch einer Komponente einer Energieerzeugungs- beziehungsweise einer Wärmeerzeugungsvorrichtung betreffen.

Beispielsweise können die Maßnahmen darin bestehen, dass bei einer Heizanlage ein Austausch oder eine Sanierung des Heizkessels vorgenommen werden sollte.

Die Datenverarbeitungsvorrichtung kann ausgebildet sein zu ermitteln, welche Energiemenge bei welcher Außentemperatur, insbesondere bei einer niedrigen Außentemperatur von beispielsweise -15°C, verbraucht wird. Aus dem so ermittelten Energieverbrauch kann die Datenverarbeitungsvorrichtung eine passende Größe des Heizkessels ermitteln und als Maßnahme zur Verringerung des CO₂-Ausstoßes die Installation eines entsprechend ausgelegten Heizkessels ermitteln.

Eine weitere Möglichkeit besteht darin, dass die Maßnahmen die Installation eines Blockheizkraftwerkes oder einer Photovoltaikanlage betreffen. Durch die Sanierung, den Austausch oder Neuinstallation von Komponenten der Energieerzeugungsvorrichtung beziehungsweise der Wärmeerzeugungsvorrichtung kann eine der Energieklasse des Gebäudes entsprechend dimensionierte Energieerzeugungsvorrichtung beziehungsweise Wärmeerzeugungsvorrichtung eingesetzt werden.

Mit weiterem Vorteil kann vorgesehen sein, dass die Energieerzeugungsvorrichtung eine Energieerzeugungsvorrichtung des Gebäudes oder eine Energieerzeugungsvorrichtung für mehrere Gebäude ist.

Die Energieerzeugungsvorrichtung, insbesondere die Wärmeerzeugungsvorrichtung, kann eine Energieerzeugungsvorrichtung eines einzelnen Gebäudes, beispielsweise eines Einfamilienhauses, sein. Darüber hinaus ist es aber auch möglich, dass die Energieerzeugungsvorrichtung, insbesondere die Wärmeerzeugungsvorrichtung, für die Energie- und/oder Wärmeerzeugung bzw. -versorgung mehrerer Gebäude zuständig ist. So kann die Energie- und/oder Wärmeerzeugungsvorrichtung ein Blockheizkraftwerk sein, welches für die Energieerzeugung und Energieversorgung mehrerer Gebäude mit Strom und Wärme eingerichtet ist. Durch Umsetzung der eine derartige zentrale Energieerzeugungsvorrichtung betreffenden und von der Datenverarbeitungsvorrichtung ermittelten Maßnahmen kann der CO₂-Ausstoß, welcher bei der Energieversorgung der mehreren Gebäude anfällt, insgesamt verringert werden, wobei gleichzeitig ein Komfortverlust für die Bewohner der Gebäude vermieden wird.

Die Energieerzeugungsvorrichtung kann zudem eine Energieerzeugungsvorrichtung eines Energieerzeugers, beispielsweise eines kommunalen Energieerzeugers, sein. Werden die entsprechenden Maßnahmen an der Energieerzeugungsvorrichtung des Energieerzeugers, beispielsweise des kommunalen Energieerzeugers, von dem Energieerzeuger umgesetzt, so wird eine Reduzierung des CO₂-Ausstoßes bei der Versorgung der mehreren Gebäude möglich.

Bei den Messdatenaufnehmern kann es sich um sogenannte Smartmeter handeln. Grundsätzlich sind auch andere Messdatenaufnehmer geeignet.

Bevorzugt sind die die Messdatenaufnehmer, insbesondere die Smartmeter, Teil einer bestehenden technischen Infrastruktur des Gebäudes, insbesondere des Bestandsgebäudes. Es kann somit auf eine bereits in dem Gebäude bestehende Infrastruktur zurückgegriffen werden. Für das System müssen somit keine neuen Messdatenaufnehmer, insbesondere Smartmeter, installiert werden, sondern es können die ohnehin in Bestandsgebäuden vorhandenen Messdatenaufnehmer, insbesondere Smartmeter, für das System verwendet werden.

Ferner kann bevorzugt vorgesehen sein, dass die Messdatenaufnehmer, insbesondere die Smartmeter, die den Energieverbrauch betreffenden Daten über ein Gateway, bevorzugt ein Smartmeter-Gateway, insbesondere bevorzugt des Gebäudes, weiter bevorzugt des Bestandsgebäudes, an die Datenverarbeitungsvorrichtung übermitteln. Die Übermittlung kann zudem über das Internet erfolgen. Dies ist insbesondere dann von Vorteil, wenn die Datenverarbeitungsvorrichtung nicht Teil des Gebäudes selbst ist, sondern eine Datenverarbeitungsvorrichtung ist, welche einem Messstellendienstleister, einem Energieerzeuger, einem Energielieferanten oder einem Netzbetreiber zugeordnet ist.

Die Messdatenaufnehmer können ferner Daten von Rauchmeldern, Schließanlagen oder Einbruchmeldeanlagen aufnehmen und bevorzugt über das Gateway, insbesondere das Smartmeter-Gateway, an die Datenverarbeitungsvorrichtung übermitteln. Die Messdatenaufnehmer können dafür Bestandteil der Rauchmelder, Schließanlagen oder Einbruchmeldeanlagen sein.

Mit weiterem Vorteil kann vorgesehen sein, dass die Datenverarbeitungsvorrichtung eingerichtet ist, für die Ermittlung des CO₂-Ausstoßes und/oder der Maßnahmen Verfahren der Künstlichen Intelligenz, insbesondere des maschinellen Lernens, einzusetzen, und/oder dass die Datenverarbeitungsvorrichtung eingerichtet ist, für die Ermittlung des CO₂-Ausstoßes und/oder der Maßnahmen regelbasierte Entscheidungsverfahren einzusetzen.

Durch die Verwendung insbesondere von Verfahren der künstlichen Intelligenz beziehungsweise des maschinellen Lernens können unrealisierte CO₂-Einsparpotenziale ermittelt werden. Verfahren der Künstlichen Intelligenz beziehungsweise Verfahren des maschinellen Lernens sind besonders gut dazu geeignet, Muster zu erkennen, welche mit anderen Verfahren nicht unmittelbar erfasst werden können.

Mit weiterem Vorteil kann vorgesehen sein, dass die Maßnahmen die Bereitstellung und/oder Sanierung einer zentralen Energieerzeugungsvorrichtung und/oder Wärmeerzeugungsvorrichtung betreffen.

Insbesondere, wenn das System mehrere Messdatenaufnehmer in mehreren Gebäuden umfasst, können die Maßnahmen, welche von der Datenverarbeitungsvorrichtung ermittelt werden, die Bereitstellung einer zentralen Energieerzeugungsvorrichtung und/oder Wärmeerzeugungsvorrichtung für die mehreren Gebäude betreffen.

Beispielsweise kann die Datenverarbeitungsvorrichtung ermitteln, dass für die Energieversorgung der mehreren Gebäude ein zentrales Blockheizkraftwerk oder eine Photovoltaikanlage zu einer Verringerung des CO₂-Ausstoßes bei ansonsten unverändertem Komfort für die Nutzer der Gebäude führen würde.

Ein Dienstleister, beispielsweise ein Energieerzeuger, Energielieferant, Messstellendienstleister oder Netzbetreiber kann diese Information nutzen und eine zentrale Energieerzeugungsvorrichtung für die mehreren Gebäude bereitstellen.

Mit weiterem Vorteil kann vorgesehen sein, dass die Maßnahmen eine Veränderung eines Energiemixes für das Gebäude betreffen und/oder dass die Maßnahmen eine Umstellung der Energiebezugsquellen für das Gebäude betreffen.

Eine weitere von der Datenverarbeitungsvorrichtung ermittelbare Maßnahme kann folglich darin bestehen, einen Energiemix für die Versorgung des einen oder der mehreren Gebäude zu verändern. Dies kann durch Umstellung der Energiebezugsquellen für das eine oder die mehreren Gebäude erfolgen.

Weiter bevorzugt wird die Maßnahme einer Veränderung eines Energiemixes für das Gebäude und/oder einer Umstellung der Energiebezugsquellen für das Gebäude dann ermittelt, wenn ein, bevorzugt gesetzlicher, Grenzwert für den CO₂-Ausstoß voraussichtlich, bevorzugt in einem Bewertungszeitraum, nicht eingehalten werden kann. Der Grenzwert für den CO₂-Ausstoß kann auf eine Fläche, insbesondere Wohn- oder Nutzfläche, bezogen sein. Ferner kann der Grenzwert pro Gebäudeeinheit oder Personenzahl angegeben sein.

Wird beispielsweise auf Basis des von dem Messdatenaufnehmer ermittelten Energieverbrauches von der Datenverarbeitungsvorrichtung festgestellt, dass ein für einen bestimmten Bewertungszeitraum, beispielsweise von einem Monat oder einem Jahr, vorbestimmter Grenzwert für den CO₂-Ausstoß voraussichtlich erreicht oder überschritten wird, so kann als Maßnahme von der Datenverarbeitungsvorrichtung vorgeschlagen werden, den Energiemix des Gebäudes zu verändern beziehungsweise eine Umstellung der Energiebezugsquellen für das Gebäude vorzunehmen.

Beispielsweise kann vorgesehen sein, dass die Maßnahmen eine, bevorzugt temporäre, Umstellung auf CO₂-neutralen Strom und/oder eine Umstellung auf CO₂-neutrale Wärme und/oder eine Umstellung auf CO₂-neutralen Brennstoff betreffen.

Mit anderen Worten kann bei einem voraussichtlichen Erreichen oder Überschreiten eines vorbestimmten Grenzwertes für einen CO₂-Ausstoß die Datenverarbeitungsvorrichtung als Maßnahme vorschlagen, zumindest temporär, die Stromversorgung des Gebäudes auf CO₂-neutralen Strom umzustellen. Analog kann die Datenverarbeitungsvorrichtung als Maßnahme vorschlagen, die Wärmeversorgung auf CO₂-neutrale Wärme oder die Brennstoffversorgung auf CO₂-neutralen Brennstoff umzustellen. Diese Maßnahme kann einem Nutzer des Gebäudes übermittelt werden. Es ist jedoch auch möglich, dass die Maßnahme, insbesondere betreffend die Umstellung auf CO₂-neutralen Strom und/oder die Umstellung auf CO₂-neutrale Wärme und/oder die Umstellung auf CO₂-neutralen Brennstoff, an weitere Parteien, wie beispielsweise an Messstellendienstleister, einen Energieerzeuger, einen Energielieferanten oder einen Netzbetreiber, übermittelt wird. Wird beispielsweise einem Messstellendienstleister die von der Datenverarbeitungsvorrichtung ermittelten Maßnahmen zur Umstellung auf CO₂-neutralen Strom übermittelt, um einen vorbestimmten Grenzwert für den CO₂-Ausstoß einzuhalten, so kann der Messstellendienstleister die Energieversorgung des Gebäudes oder der mehreren Gebäude zumindest für einen vorbestimmten Zeitraum auf CO₂-neutralen Strom umstellen. Durch diese Maßnahme kann auch bei einem gegebenenfalls temporären Überschreiten oder einem drohenden Überschreiten eines Grenzwertes für einen CO₂-Ausstoß der CO₂-Ausstoß reduziert werden beziehungsweise der Grenzwert eingehalten werden. Ferner ist möglich, dass die Datenverarbeitungsvorrichtung die Maßnahme an einen Messdatenaufnehmer, insbesondere ein Smartmeter, und/oder an ein Gateway, insbesondere ein Smartmeter-Gateway, übermittelt, welches die von der Datenverarbeitungsvorrichtung ermittelte Maßnahme umsetzt.

Der CO₂-neutrale Brennstoff kann auch ein synthetischer Brennstoff sein.

In einer Ausführungsform werden die von den Messdatenaufnehmern ermittelten Daten zum Energieverbrauch an einen Messstellendienstleister übermittelt, welcher diese Daten an die Datenverarbeitungsvorrichtung sendet. Die Datenverarbeitungsvorrichtung ermittelt beispielsweise, dass für einen bestimmten Bewertungszeitraum, beispielsweise einen Monat, die CO₂-Grenzwerte voraussichtlich nicht mehr eingehalten werden können und ermittelt als Maßnahme zur Verringerung des CO₂-Ausstoßes, dass eine Umstellung auf CO₂-neutralen Strom zu einer Einhaltung des Grenzwertes führen würde. Die Datenverarbeitungsvorrichtung übermittelt diesen Vorschlag betreffend die Umstellung auf CO₂-neutralen Strom an den Messstellendienstleister, welcher daraufhin eine Versorgung des jeweiligen Gebäudes mit CO₂-neutralem Strom sicherstellt, beispielsweise indem der Messstellendienstleister bei einem Energieerzeuger oder Energielieferanten ein entsprechendes CO₂-neutrales Stromkontingent für die Energieversorgung des einen oder der mehreren Gebäude bestellt.

Darüber hinaus kann vorgesehen sein, dass ein Gateway, insbesondere ein Smartmeter-Gateway, des oder der Gebäude die Umstellung auf CO₂-neutralen Strom und/oder die Umstellung auf CO₂-neutrale Wärme und/oder die Umstellung auf CO₂-neutralen Brennstoff veranlasst.

Ferner können die von der Datenverarbeitungsvorrichtung ermittelten Maßnahmen auch eine Abschaltung oder, bevorzugt stufenlose, Herunterregelung eines, bevorzugt elektrischen, Verbrauchers in dem oder den Gebäuden umfassen.

Weiter bevorzugt kann die Datenverarbeitungsvorrichtung auch ausgebildet sein, den, bevorzugt elektrischen, Verbraucher per Fernzugriff bzw. Remote-Zugriff abzuschalten oder herunterzuregeln.

Der, bevorzugt elektrische, Verbraucher kann ein Ventilator einer Belüftungsanlage oder eine Umwälzpumpe des Gebäudes sein.

Beispielsweise kann ein Ventilator einer Belüftungsanlage heruntergeregelt werden, wenn ein Messdatenaufnehmer, bevorzugt ein Bewegungsmelder oder ein CO₂-Sensor, anzeigt, dass keine oder wenige Personen sich in einem Raum befinden.

Die Datenverarbeitungsvorrichtung kann ausgebildet sein, vor dem Abschalten oder Herunterregeln des Verbrauchers eine Freigabe durch den Nutzer anzufordern. Durch die Anforderung der Freigabe durch den Nutzer können Komfortverluste vermieden werden, welche bei einem Abschalten oder Herunterregeln des Verbrauchers ohne eine Freigabe entstehen könnten.

Bevorzugt ist die Datenverarbeitungsvorrichtung ausgebildet, den, bevorzugt elektrischen, Verbraucher per Fernzugriff bzw. Remote-Zugriff abzuschalten oder herunterzuregeln, bevor eine Umstellung auf CO₂-neutralen Strom erfolgt. Das Abschalten oder Herunterregelung des Verbrauchers ist dann eine Vorstufe zur Umschaltung auf CO₂-neutralen Strom.

Die Datenverarbeitungsvorrichtung kann auch ausgebildet sein, Maßnahmen zur Steuerung der Energieaufnahme von Verbrauchern zu ermitteln und an ein Gateway, insbesondere ein Smartmeter-Gateway, oder an eine Gebäudeelektronik oder an den Verbraucher zu übermitteln. So kann die Datenverarbeitungsvorrichtung ermitteln, dass eine Warmwasserbereitung auf einen Zeitpunkt verschoben wird, zu dem viel CO₂-neutraler Strom zur Verfügung steht. Wenn ein Nutzer beispielsweise erst zu einer späteren Tageszeit warmes Wasser benötigt, kann die Datenverarbeitungsvorrichtung ermitteln, dass der Beginn der Warmwasserbereitung von beispielsweise 8:00 morgens auf 10:00 morgens verschoben wird, wenn beispielsweise mehr Solarstrom zur Verfügung steht.

Dabei ist bevorzugt vorgesehen, dass ein Nutzer diese Steuerung freigibt. Hierfür kann ein vom Nutzer wählbarer Komfortlevel vorgesehen sein. Wenn der Nutzer beispielsweise Komfortlevel "10" wählt, kann dies heißen, dass die eingestellte Raumsolltemperatur mit konventionelle Energie erreicht wird. Je kleiner die Komfortzahl ist, desto mehr findet das Angebot an grüner bzw. CO₂-neutraler Energie Berücksichtigung. Wenn für morgens 10:00 Uhr zum Beispiel die Wind-Energie stark zunimmt, verschiebt sich der Start der Heizung von ehemals 8:00 Uhr auf 10:00 Uhr, d.h. der Komfort lässt nach, aber das Angebot an grüner Energie wird genutzt, anstatt mit schwarzer Energie das Komfortziel zu erreichen.

Ferner kann eine Freigabe oder Einstellung, insbesondere des Komfortlevels, vom Nutzer auch mittels einer Smartphone-App im Rahmen eines Tages-, Wochen- und/oder Jahreskalenders erfolgen. Bei Eintrag in den auf dem Smartphone ausgeführten Kalender kann beispielsweise ein Auswärts-Ereignis automatisch zum Absenken der Raumtemperatur und zum Verringern des Komfortlevels führen.

Mit weiterem Vorteil kann vorgesehen sein, dass die Datenverarbeitungsvorrichtung ausgebildet ist, die Maßnahmen, insbesondere die Maßnahmen betreffend das Verbrauchsverhalten eines Nutzers, periodisch und/oder kontinuierlich zu ermitteln.

Da das Verbrauchsverhalten für Energie eines Nutzers eines Gebäudes in der Regel nicht konstant ist, ist es vorteilhaft, wenn die Maßnahmen betreffend das Verbrauchsverhalten eines Nutzers periodisch und kontinuierlich ermittelt werden.

Bevorzugt ist vorgesehen, dass das System in zwei Phasen eingesetzt wird, wobei in einer ersten Phase Maßnahmen betreffend die Energieerzeugungsvorrichtung, insbesondere der Wärmeerzeugungsvorrichtung, ermittelt werden, und wobei in einer auf die erste Phase folgenden zweiten Phase Maßnahmen betreffend das Verbrauchsverhalten des Nutzers ermittelt werden.

Die Ermittlung der Maßnahmen betreffend das Verbrauchsverhalten des Nutzers kann dabei insbesondere auch nach Durchführung der Maßnahmen betreffend die Energieerzeugungsvorrichtung, insbesondere der Wärmeerzeugungsvorrichtung, fortgesetzt werden. Wurden beispielsweise von der Datenverarbeitungsvorrichtung in einer ersten Phase ermittelte Maßnahmen zur Sanierung einer Energie- oder Wärmeerzeugungsvorrichtung, wie beispielsweise einer Heizanlage, umgesetzt, so können auch nach der Umsetzung der Sanierungsmaßnahmen noch Einsparpotenziale für den CO₂-Ausstoß in einer zweiten Phase ermittelt werden. Die Einsparpotenziale bestehen wesentlich in einer Änderung des Verbrauchsverhaltens für Energie eines Nutzers. Es können somit auch nach der Umsetzung der Sanierungsmaßnahmen für die Energieerzeugungsvorrichtung weitere CO₂-Einsparpotenziale realisiert werden.

Mit weiterem Vorteil ist vorgesehen, dass die Datenverarbeitungsvorrichtung ausgebildet ist, die Maßnahmen einem Energieerzeuger, und/oder einem Energielieferanten, und/oder einem Netzbetreiber und/oder einem Messstellendienstleister zu übermitteln, wobei bevorzugt der Energieerzeuger, und/oder der Energielieferant, und/oder der Netzbetreiber und/oder der Messstellendienstleister die Maßnahme umsetzt.

Ferner kann vorgesehen sein, dass die Datenverarbeitungsvorrichtung die Maßnahmen an einen Messdatenaufnehmer, insbesondere ein Smartmeter, an ein Gateway, insbesondere ein Smartmeter-Gateway, übermittelt, wobei bevorzugt der Messdatenaufnehmer, insbesondere der Smartmeter, und/oder das Gateway, insbesondere das Smartmeter-Gateway, die Maßnahmen umsetzt.

Die Datenverarbeitungsvorrichtung kann Maßnahmen, insbesondere zur Steuerung, betreffend den optimalen Einsatz einer Wärmepumpe ermitteln. Dafür kann die Datenverarbeitungsvorrichtung berücksichtigen, wie groß die aktuelle Liefermöglichkeit von grünem bzw. CO₂-neutralem Strom ist. Ferner kann eine Angebot-/Nachfrage-Regelung im Echtzeitbetrieb erfolgen. Immer wenn grüne bzw. CO₂-neutrale Energie im Überschuss vorhanden ist, kann eine Umstellung auf CO₂-neutralen Strom und/oder auf CO₂-neutrale Wärme und/oder auf CO₂-neutralen Brennstoff veranlasst werden, bzw. es kann ein Tarifwechsel vorgenommen werden.

Wie bereits vorstehend erläutert können die Maßnahmen, welche von der Datenverarbeitungsvorrichtung vorgeschlagen werden, nicht nur Maßnahmen betreffen, welche von einem Gebäudeeigentümer umgesetzt werden können. So ist es auch möglich, dass die Maßnahmen beispielsweise eine Sanierung oder einen Austausch einer Energieerzeugungsvorrichtung eines Energielieferanten, eines Netzbetreibers etc. betreffen. Auch ist es möglich, dass, wie ebenfalls vorbeschrieben, die Maßnahmen eine Umstellung des Energiemixes beziehungsweise der Bezugsquellen von Energie für das Gebäude betreffen. Derartige Maßnahmen können ebenfalls von dem Energieerzeuger, dem Energielieferanten, dem Netzbetreiber oder dem Messstellendienstleister umgesetzt werden. Es ist daher von Vorteil, dass die Maßnahmen von der Datenverarbeitungsvorrichtung an den Energieerzeuger, den Energielieferanten, den Netzbetreiber oder den Messstellendienstleister übermittelt werden, welcher dann diese Maßnahmen umsetzt.

Fermer kann die Datenverarbeitungsvorrichtung ausgebildet sein, eine maximale Leistung eines oder mehrerer Wärmeerzeuger zu berechnen. Weiterhin kann die Datenverarbeitungsvorrichtung ausgebildet sein, eine maximal notwendige Vorlauftemperatur zu berechnen, und/oder einen Anteil der Leistung für Warmwasserbereitung zu ermitteln.

Hierdurch kann der Zustand der Gebäudehülle in Bezug auf die Dämmung dargestellt werden. Die Wärmeerzeugung kann unter Berücksichtigung der eventuell vorhandenen Energiegewinnung aus Fotovoltaik, Abwärme, Energierückgewinnung, Solarthermieanlage usw. neu konfiguriert werden. Somit kann eine von der Datenverarbeitungsvorrichtung ermittelte Maßnahme sein, die Warmwasserbereitung elektrisch durchzuführen. Ferner kann beurteilt werden, ob es günstiger ist, eine Wärmepumpe, insbesondere bis zu welcher Außentemperatur, einzusetzen, und wie der Spitzenlastbedarf bei tieferen Außentemperaturen abgedeckt werden kann.

Die Datenverarbeitungsvorrichtung kann ausgebildet sein den optimalen Einsatz einer Wärmepumpe in Abhängigkeit vom Verhältnis des Gaspreises zum Strompreis zu ermitteln. Je mehr sich der Gaspreis dem Strompreis nähert, umso wirtschaftlicher wird der Einsatz der Wärmepumpe auch bei einer Leistungsziffer kleiner drei.

Mit weiterem Vorteil kann vorgesehen sein, dass die Datenverarbeitungsvorrichtung ausgebildet ist, die Maßnahmen dem Nutzer, insbesondere einem Gebäudeeigentümer und/oder einem Gebäudenutzer, zu übermitteln, wobei die Datenverarbeitungsvorrichtung ausgebildet ist, die Maßnahmen über eine Software, bevorzugt über eine auf einem mobilen Datenverarbeitungsgerät, insbesondere einem Smartphone oder einem Tablet, ausführbare Software, zu übermitteln.

Durch die, bevorzugt regelmäßige, Übermittlung der Maßnahmen an den Nutzer, insbesondere an den Gebäudeeigentümer oder den Gebäudenutzer, kann dieser auch nach der Sanierung oder dem Austausch der Energieerzeugungsvorrichtung weiter zu der Reduzierung des CO₂-Ausstoßes durch Änderung seines Verbrauchsverhaltens beitragen. Zu diesem Zweck können dem Nutzer beispielsweise über ein Smartphone oder ein Tablet und eine darauf ausgeführte App geeignete Vorschläge zur Änderung seines Verbrauchsverhaltens übermittelt werden. Zudem kann dem Nutzer regelmäßig die CO₂-Bilanz des Energieverbrauchs oder das Drohen einer Grenzwertverletzung für den CO₂-Ausstoß mitgeteilt werden. Der Nutzer erhält daher ein regelmäßiges Feedback zu seinem Verbrauchsverhalten.

Darüber hinaus ist es möglich, dass der Nutzer, insbesondere der Gebäudeeigentümer oder der Gebäudenutzer, weiter bevorzugt über die auf dem Smartphone oder Tablet ausführbare Software, Änderungen der Stammdaten an die Datenverarbeitungsvorrichtung übermittelt. Ändert sich zum Beispiel die Anzahl der ein Gebäude nutzenden Personen, so kann diese Änderung der Personenanzahl an die Datenverarbeitungsvorrichtung übermittelt werden, welche diese veränderten Stammdaten für die Ermittlung der Maßnahmen zur Verringerung des CO₂-Ausstoßes berücksichtigt.

Mit weiterem Vorteil kann vorgesehen sein, dass der Messdatenaufnehmer ein Wärmemengenmessaufnehmer ist, wobei bevorzugt vorgesehen ist, dass eine Inrechnungstellung der Wärmeversorgung des Gebäudes seitens eines Energieerzeugers, und/oder eines Energielieferanten, und/oder eines Netzbetreibers und/oder eines Messstellendienstleisters auf Basis eines Wärmeverbrauchs erfolgt, wobei weiter bevorzugt die Datenverarbeitungsvorrichtung ausgebildet ist, die Inrechnungstellung durchzuführen.

Von besonderem Vorteil ist es, wenn nach der Sanierung oder dem Austausch der Energieversorgungsvorrichtung beziehungsweise der Wärmeerzeugungsvorrichtung nicht mehr der Primärenergieverbrauch des Gebäudes oder der mehreren Gebäude, wie beispielsweise der Stromverbrauch oder der Brennstoffverbrauch, einer Inrechnungstellung der Wärme- oder Energieversorgung zugrunde gelegt wird, sondern dass die Inrechnungstellung der Energieversorgung beziehungsweise der Wärmeversorgung auf Basis der tatsächlich genutzten Wärmeenergie erfolgt. Hierdurch bieten sich einem Energieerzeuger oder Energielieferanten Kostenvorteile.

Durch die erfindungsgemäß von der Datenverarbeitungsvorrichtung ermittelten Maßnahmen kann der CO₂-Ausstoß bei ansonsten unverändertem Komfort für den Nutzer des Gebäudes verringert werden. Diese CO₂-Einsparpotenziale können auch von dem Energieerzeuger, dem Energielieferanten, dem Messstellendienstleister oder dem Netzbetreiber genutzt werden. Dem Nutzer des Gebäudes oder den Nutzern der mehreren Gebäude wird die für die Beheizung beziehungsweise die Warmwasseraufbereitung benötigte Wärmemenge in Rechnung gestellt. Durch die Effizienzsteigerung bei der Verwendung von Primärenergie wird es dadurch möglich, bei reduziertem Einsatz von CO₂-belasteten Energiequellen eine gleichbleibende Wärmeversorgung der Gebäude oder des Gebäudes zu ermöglichen. Hiermit bieten sich somit große Einsparpotenziale für den Energielieferanten oder Energieerzeuger. Dem Nutzer gegenüber wird die für die Beheizung oder Warmwasserbereitung des Gebäudes benötigte Wärmemenge transparent abgerechnet. Der Energieerzeuger oder Energielieferant kann durch die Umsetzung der Maßnahmen zur Verringerung des CO₂-Ausstoßes die Menge an eingesetzten Primärenergien, wie beispielsweise Erdgas oder Kohle, reduzieren und seine Gewinnmarge erhöhen.

Mit weiterem Vorteil kann vorgesehen sein, dass die Datenverarbeitungsvorrichtung ausgebildet ist, Informationen für Dritte zu ermitteln, wobei der Dritte bevorzugt ein Bauamt, ein Umweltamt, ein Kämmerer oder ein Hausmeister ist.

Beispielsweise kann die Datenverarbeitungsvorrichtung ausgebildet sein, Informationen für ein Effizienzkataster zu ermitteln und an ein Bauamt zu übermitteln. Darüber hinaus können Energieausweise von der Datenverarbeitungsvorrichtung erstellt und Sanierungserfolge verifiziert werden. Derartige Daten sind insbesondere für Bauämter von Interesse. Ferner kann die Datenverarbeitungsvorrichtung ausgebildet sein, eine CO₂-Bilanz beziehungsweise einen Energiebericht zu erstellen und beispielsweise an ein Umweltamt versenden. Darüber hinaus kann vorgesehen sein, dass die Datenverarbeitungsvorrichtung ausgebildet ist, aktuelle Energiekosten, eine Jahreshochrechnung oder Benchmarks zu erstellen und an einen Kämmerer einer Gemeinde zu übermitteln. Dies ist insbesondere dann vorteilhaft, wenn der Energieerzeuger ein kommunaler Energieerzeuger ist. Ferner kann vorgesehen sein, dass die Datenverarbeitungsvorrichtung ausgebildet ist, Alarmmeldungen oder CO₂-Grenzwertverletzungen einem Hausmeister des oder der Gebäude zu übermitteln. Ferner kann das System eine oder mehrere Ladesäulen umfassen, wobei die Ladesäulen in dem oder den Gebäuden angeordnet sind und/oder dem oder den Gebäuden zugeordnet sind. Beispielsweise können die Ladesäulen in einer Wohnanlage mit mehreren Gebäuden angeordnet sein.

Die Ladesäulen können jeweils einen oder mehrere Ladeplätze aufweisen. Nutzer, insbesondere Bewohner, des oder der Gebäude können Hybridelektrokraftfahrzeuge oder batterieelektrische Fahrzeuge an den Ladesäulen laden.

Beispielsweise können die Nutzer, bevorzugt per einer auf einem Smartphone ausführbaren Software, App eine Ladedauer oder eine Strommenge buchen.

Eine Ladesäule kann über mehrere Ladeplätze gegebenenfalls mehrere Hybridelektrokraftfahrzeuge oder batterieelektrische Fahrzeuge, gleichzeitig oder nacheinander laden.

Der verbrauchte Strom kann für die Ermittlung des CO₂-Ausstoßes durch die Datenverarbeitungsvorrichtung herangezogen werden und dem jeweiligen Benutzer zugerechnet werden.

Weist das System eine Ladesäule auf, so können die von der Datenverarbeitungsvorrichtung ermittelten Maßnahmen, welche eine Verringerung des CO₂-Ausstoßes bewirken, auch die Maßnahme umfassen, dass, bevorzugt innerhalb eines Ladezeitraums, eine Umstellung der Energiebezugsquellen für den Ladevorgang erfolgen sollte.

Beispielsweise kann für den Ladevorgang eine Umstellung auf CO₂-neutralen Strom vorgeschlagen werden. Ferner besteht die Möglichkeit, zum Beispiel tagsüber Strom einer Photovoltaikanlage für den Ladevorgang zu verwenden.

Eine weitere Lösung der Erfindung besteht in einem Verfahren zur Verringerung eines CO₂-Ausstoßes bei der Energieversorgung von Gebäuden, insbesondere durchführbar oder durchgeführt unter Verwendung eines vorbeschriebenen Systems, wobei in einem Gebäude mindestens ein Messdatenaufnehmer eingerichtet zur Ermittlung eines Energieverbrauchs vorgesehen ist, wobei eine Datenverarbeitungsvorrichtung für einen Ermittlungszeitraum auf Basis eines ermittelten Energieverbrauchs einen CO₂-Ausstoß ermittelt, dadurch gekennzeichnet, dass die Datenverarbeitungsvorrichtung Maßnahmen ermittelt, welche eine Verringerung des CO₂-Ausstoßes bei der Energieversorgung des Gebäudes bewirken.

Sämtliche im Zusammenhang mit dem vorstehend beschriebenen System erläuterten Merkmale, Funktionen und Vorteile sind in entsprechender Weise auch auf das erfindungsgemäße Verfahren anwendbar.

Bei der Energieversorgung kann es sich um eine Stromversorgung, Wärmeversorgung, Wasserversorgung oder Kälteversorgung handeln.

So kann vorgesehen sein, dass in mehreren Gebäuden Messdatenaufnehmer eingerichtet zur Ermittlung eines Energieverbrauchs vorgesehen sind, wobei die Maßnahmen eine Verringerung des CO₂-Ausstoßes bei der Energieversorgung der mehreren Gebäude bewirken.

Ferner ist bevorzugt vorgesehen, dass die Maßnahmen bei einem im Wesentlichen unveränderten Wärmeverbrauch eine Verringerung des CO₂-Ausstoßes bewirken.

Mit Vorteil ist vorgesehen, dass das Gebäude ein saniertes Gebäude ist, und/oder dass das Gebäude eine sanierte Gebäudehülle aufweist.

Es ist jedoch auch möglich, dass das Gebäude kein saniertes Gebäude ist, und/oder dass das Gebäude keine sanierte Gebäudehülle aufweist. Dies bedeutet, dass das Verfahren zur Verringerung eines CO₂-Ausstoßes bei der Energieversorgung von Gebäuden durchgeführt wird, bevor eine Sanierung des Gebäudes oder der Gebäude stattgefunden hat.

Bevorzugt ist auch, dass der Energieverbrauch ein Brennstoffverbrauch und/oder ein Stromverbrauch und/oder ein Wärmeverbrauch ist.

Zudem kann vorgesehen sein, dass sich die Maßnahmen auf Maßnahmen betreffend eine Energieerzeugungsvorrichtung, bevorzugt einer Wärmeerzeugungsvorrichtung, und/oder auf Maßnahmen betreffend ein Verbrauchsverhalten eines Nutzers beziehen.

Die Maßnahmen können sich auch auf Maßnahmen betreffend eine Sanierung des Gebäudes oder der Gebäude beziehen. Insbesondere ist es möglich, dass die Datenverarbeitungsvorrichtung für einen ersten Ermittlungszeitraum auf Basis eines ermittelten Energieverbrauchs einen CO₂-Ausstoß ermittelt, und erste Maßnahmen zur Verringerung des CO₂-Ausstoßes bei der Energieversorgung des Gebäudes oder der Gebäude ermittelt, welche eine Sanierung des Gebäudes oder der Gebäude bzw. der Gebäudehülle des Gebäudes oder der Gebäude betreffen. Die Datenverarbeitungsvorrichtung kann ferner anschließend für einen zweiten Ermittlungszeitraum auf Basis eines ermittelten Energieverbrauchs einen CO₂-Ausstoß ermitteln, und zweite Maßnahmen zur Verringerung des CO₂-Ausstoßes bei der Energieversorgung des Gebäudes oder der Gebäude ermitteln, welche eine Energieerzeugungsvorrichtung, bevorzugt einer Wärmeerzeugungsvorrichtung, und/oder ein Verbrauchsverhalten eines Nutzers betreffen.

Umgekehrt ist es möglich, dass die Datenverarbeitungsvorrichtung für einen ersten Ermittlungszeitraum auf Basis eines ermittelten Energieverbrauchs einen CO₂-Ausstoß ermittelt, und erste Maßnahmen zur Verringerung des CO₂-Ausstoßes bei der Energieversorgung des Gebäudes oder der Gebäude ermittelt, welche eine Energieerzeugungsvorrichtung, bevorzugt einer Wärmeerzeugungsvorrichtung, und/oder ein Verbrauchsverhalten eines Nutzers betreffen. Die Datenverarbeitungsvorrichtung kann ferner anschließend für einen zweiten Ermittlungszeitraum auf Basis eines ermittelten Energieverbrauchs einen CO₂-Ausstoß ermitteln, und zweite Maßnahmen zur Verringerung des CO₂-Ausstoßes bei der Energieversorgung des Gebäudes oder der Gebäude ermitteln, welche eine Sanierung des Gebäudes oder der Gebäude bzw. der Gebäudehülle des Gebäudes oder der Gebäude betreffen.

Ferner ist bevorzugt, dass die Maßnahmen eine Neuinstallation und/oder eine Sanierung und/oder einen Austausch, bevorzugt einer Komponente, der Energieerzeugungsvorrichtung, weiter bevorzugt der Wärmeerzeugungsvorrichtung, betreffen.

Bevorzugt ist die Energieerzeugungsvorrichtung eine Energieerzeugungsvorrichtung des Gebäudes oder eine Energieerzeugungsvorrichtung für mehrere Gebäude.

Ferner ist bevorzugt, dass die Datenverarbeitungsvorrichtung für die Ermittlung des CO₂-Ausstoßes und/oder der Maßnahmen Verfahren der Künstlichen Intelligenz, insbesondere des maschinellen Lernens, einsetzt, und/oder dass die Datenverarbeitungsvorrichtung für die Ermittlung des CO₂-Ausstoßes und/oder der Maßnahmen regelbasierte Entscheidungsverfahren einsetzt.

Zudem kann vorgesehen sein, dass die Maßnahmen die Bereitstellung einer zentralen Energieerzeugungsvorrichtung und/oder Wärmeerzeugungsvorrichtung betreffen.

Auch kann mit Vorteil vorgesehen sein, dass die Maßnahmen eine Veränderung eines Energiemixes für das Gebäude betreffen und/oder dass die Maßnahmen eine Umstellung der Energiebezugsquellen für das Gebäude betreffen.

Zudem ist es bevorzugt, dass die Maßnahmen eine, bevorzugt temporäre, Umstellung auf CO₂-neutralen Strom und/oder eine Umstellung auf CO₂-neutrale Wärme und/oder eine Umstellung auf CO₂-neutralen Brennstoff betreffen.

Die, bevorzugt temporäre, Umstellung auf CO₂-neutralen Strom und/oder auf CO₂-neutrale Wärme und/oder auf CO₂-neutralen Brennstoff kann dabei von der Datenverarbeitungsvorrichtung, einem Messstellendienstleister, einem Energieerzeuger, einem Energielieferanten oder einem Netzbetreiber, oder einem Messdatenaufnehmer, insbesondere einem Smartmeter, oder einem Gateway, insbesondere einem Smartmeter-Gateway, umgesetzt werden. Zu diesem Zweck kann die von der Datenverarbeitungsvorrichtung ermittelte Maßnahme zur Umstellung auf CO₂-neutralen Strom und/oder auf CO₂-neutrale Wärme und/oder auf CO₂-neutralen Brennstoff an die entsprechende Einheit übermittelt werden.

Ferner kann die Datenverarbeitungsvorrichtung Maßnahmen zur Steuerung der Energieaufnahme von Verbrauchern, insbesondere von elektrischen Verbrauchern oder Wärmeverbrauchern, ermitteln und an ein Gateway, insbesondere ein Smartmeter-Gateway, oder an eine Gebäudeelektronik oder an den Verbraucher übermitteln. So kann die Datenverarbeitungsvorrichtung ermitteln, dass eine Warmwasserbereitung auf einen Zeitpunkt verschoben wird, zu dem viel CO₂-neutraler Strom zur Verfügung steht. Wenn ein Nutzer beispielsweise erst zu einer späteren Tageszeit warmes Wasser benötigt, kann die Datenverarbeitungsvorrichtung ermitteln, dass der Beginn der Warmwasserbereitung von beispielsweise 8:00 morgens auf 10:00 morgens verschoben wird, wenn beispielsweise mehr Solarstrom zur Verfügung steht.

Dabei ist bevorzugt vorgesehen, dass ein Nutzer diese Steuerung freigibt. Hierfür kann ein vom Nutzer wählbarer Komfortlevel vorgesehen sein. Wenn der Nutzer beispielsweise Komfortlevel "10" wählt, kann dies heißen, dass die eingestellte Raumsolltemperatur mit konventioneller Energie erreicht wird. Je kleiner die Komfortzahl ist, desto mehr findet das Angebot an grüner bzw. CO₂-neutraler Energie Berücksichtigung. Wenn für morgens 10:00 Uhr zum Beispiel die Wind-Energie stark zunimmt, verschiebt sich der Start der Heizung von ehemals 8:00 Uhr auf 10:00 Uhr, d.h. der Komfort lässt nach, aber das Angebot an grüner Energie wird genutzt, anstatt mit schwarzer Energie das Komfortziel zu erreichen.

Ferner kann eine Freigabe oder Einstellung, insbesondere des Komfortlevels, vom Nutzer auch mittels einer Smartphone-App im Rahmen eines Tages-, Wochen- und/oder Jahreskalenders erfolgen. Bei Eintrag in den auf dem Smartphone ausgeführten Kalender kann beispielsweise ein Auswärts-Ereignis automatisch zum Absenken der Raumtemperatur und zum Verringern des Komfortlevels führen.

Ferner kann die Ermittlung der Maßnahmen, insbesondere der Maßnahmen betreffend des Verbrauchsverhaltens eines Nutzers, periodisch und/oder kontinuierlich erfolgen.

Darüber hinaus kann vorgesehen sein, dass die Maßnahmen einem Energieerzeuger, und/oder einem Energielieferanten, und/oder einem Netzbetreiber und/oder einem Messstellendienstleister übermittelt werden, wobei bevorzugt der Energieerzeuger, und/oder der Energielieferant, und/oder der Netzbetreiber und/oder der Messstellendienstleister die Maßnahmen umsetzt.

Ferner kann vorgesehen sein, dass die Maßnahmen an einen Messdatenaufnehmer, insbesondere ein Smartmeter, oder an ein Gateway, insbesondere ein Smartmeter-Gateway, übermittelt werden, wobei bevorzugt der Messdatenaufnehmer, insbesondere der Smartmeter, und/oder das Gateway, insbesondere das Smartmeter-Gateway, die Maßnahmen umsetzt.

Die Datenverarbeitungsvorrichtung kann Maßnahmen, insbesondere zur Steuerung, betreffend den optimalen Einsatz einer Wärmepumpe ermitteln. Dafür kann die Datenverarbeitungsvorrichtung berücksichtigen, wie groß die aktuelle Liefermöglichkeit von grünem bzw. CO₂-neutralem Strom ist. Ferner kann eine Angebot-/Nachfrage-Regelung im Echtzeitbetrieb erfolgen. Immer wenn grüne bzw. CO₂-neutrale Energie im Überschuss vorhanden ist, kann eine Umstellung auf CO₂-neutralen Strom und/oder auf CO₂-neutrale Wärme und/oder auf CO₂-neutralen Brennstoff veranlasst werden, bzw. es kann ein Tarifwechsel vorgenommen werden.

Bevorzugt ist zudem, dass die Maßnahmen dem Nutzer, insbesondere einem Gebäudeeigentümer und/oder einem Gebäudenutzer, übermittelt werden, wobei die Übermittlung der Maßnahmen über eine Software, bevorzugt über eine auf einem mobilen Datenverarbeitungsgerät, insbesondere einem Smartphone oder einem Tablet, ausführbare Software, erfolgt.

Auch kann vorteilhaft vorgesehen sein, dass der Messdatenaufnehmer ein Wärmemengenmessaufnehmer ist, wobei bevorzugt eine Inrechnungstellung der Wärmeversorgung des Gebäudes seitens eines Energieerzeugers, und/oder eines Energielieferanten, und/oder eines Netzbetreibers und/oder eines Messstellendienstleisters auf Basis des Wärmeverbrauchs erfolgt.

Ferner kann, insbesondere von der Datenverarbeitungsvorrichtung, eine maximale Leistung eines oder mehrerer Wärmeerzeuger berechnet werden. Weiterhin kann, insbesondere von der Datenverarbeitungsvorrichtung, eine maximal notwendige Vorlauftemperatur berechnet werden, und/oder einen Anteil der Leistung für Warmwasserbereitung ermittelt werden.

Hierdurch kann der Zustand der Gebäudehülle in Bezug auf die Dämmung dargestellt werden. Die Wärmeerzeugung kann unter Berücksichtigung der eventuell vorhandenen Energiegewinnung aus Fotovoltaik, Abwärme, Energierückgewinnung, Solarthermieanlage usw. neu konfiguriert werden. Somit kann eine von der Datenverarbeitungsvorrichtung ermittelte Maßnahme sein, die Warmwasserbereitung elektrisch durchzuführen. Ferner kann beurteilt werden, ob es günstiger ist, eine Wärmepumpe, insbesondere bis zu welcher Außentemperatur, einzusetzen, und wie der Spitzenlastbedarf bei tieferen Außentemperaturen abgedeckt werden kann.

Die Datenverarbeitungsvorrichtung kann zudem den optimalen Einsatz einer Wärmepumpe in Abhängigkeit vom Verhältnis des Gaspreises zum Strompreises ermitteln. Je mehr sich der Gaspreis dem Strompreis nähert, umso wirtschaftlicher wird der Einsatz der Wärmepumpe auch bei einer Leistungsziffer kleiner drei.

Zudem kann es vorteilhaft sein, dass die Datenverarbeitungsvorrichtung Informationen für Dritte ermittelt, wobei der Dritte bevorzugt ein Bauamt, ein Umweltamt, ein Kämmerer oder ein Hausmeister ist.

### Kurze Beschreibung der Figuren

Die Erfindung wird nachstehend näher anhand der beigefügten Figuren erläutert.

Es zeigen:
- Fig. 1: ein System zur Verringerung eines CO₂-Ausstoßes bei der Energieversorgung von Gebäuden,
- Fig. 2: einen zeitlichen Verlauf des CO₂-Ausstoßes eines Gebäudes,
- Fig. 3: ein weiteres System zur Verringerung eines CO₂-Ausstoßes bei der Energieversorgung von Gebäuden,
- Fig. 4: ein noch weiteres System zur Verringerung eines CO₂-Ausstoßes bei der Energieversorgung von Gebäuden,
- Fig. 5: ein Gebäude mit einer Ladestation für Hybridelektrokraftfahrzeuge oder batterieelektrische Fahrzeuge,
- Fig. 6: einen weiteren zeitlichen Verlauf des CO₂-Ausstoßes eines Gebäudes, und
- Fig. 7: eine weitere Darstellung eines Systems zur Verringerung eines CO₂-Ausstoßes bei der Energieversorgung von Gebäuden.

### Ausführliche Beschreibung der Figuren

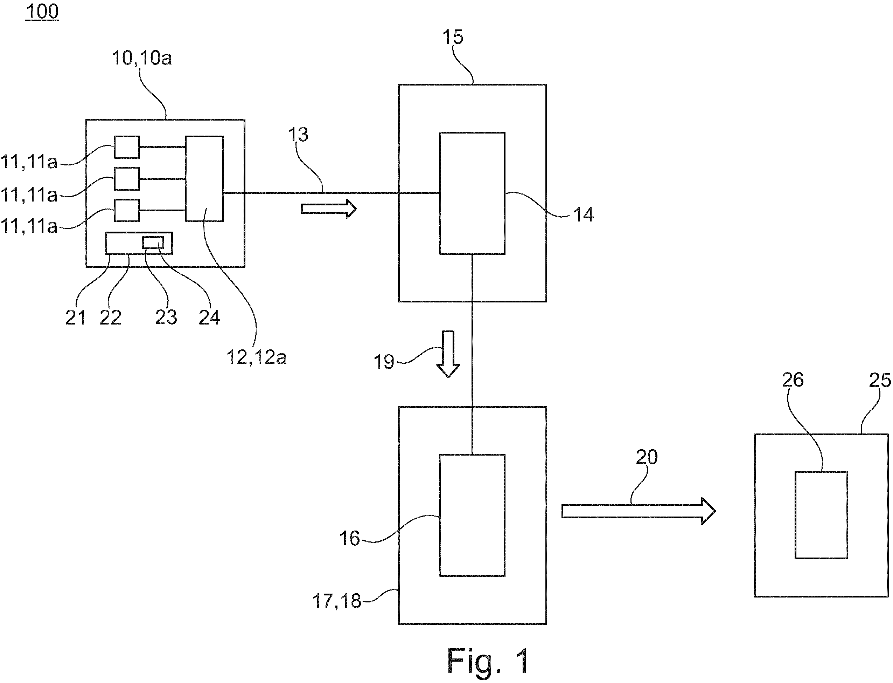

Fig. 1 zeigt ein System 100 zur Verringerung eines CO₂-Ausstoßes bei der Energieversorgung von Gebäuden. Das System 100 umfasst in einem Gebäude 10, insbesondere in einem Bestandsgebäude 10a, angeordnete Messdatenaufnehmer 11, welche im dargestellten Fall als sogenannte Smartmeter 11a ausgebildet sind. Bei dem Gebäude 10 handelt es sich um ein saniertes Gebäude 10, an welchem beispielsweise Dämmmaßnahmen vorgenommen wurden. Die Messdatenaufnehmer 11 sind ausgebildet, einen Energieverbrauch, wie beispielsweise einen Wärmeverbrauch, einen Stromverbrauch oder einen Brennstoffverbrauch bei der Energieversorgung, insbesondere bei der Wärmeversorgung, des Gebäudes 10 zu ermitteln. Der Energieverbrauch wird über einen Ermittlungszeitraum, beispielsweise sechs Monate, ermittelt. Die von dem Messdatenaufnehmer 11 aufgenommenen Daten werden über ein Gateway 12, insbesondere ein Smartmeter-Gateway 12a, und über das Internet 13 an ein Rechenzentrum 14 eines Messstellendienstleisters 15 übermittelt. Das System 100 umfasst ferner eine Datenverarbeitungsvorrichtung 16, welche dem Messstellendienstleister 15 oder einem weiteren Dienstleister 17, wie beispielsweise einem Energieerzeuger 18, zugeordnet ist. Der Messstellendienstleister 15 leitet die von den Messdatenaufnehmern 11 ermittelten Verbrauchsdaten 19 an die Datenverarbeitungsvorrichtung 16 weiter. Auf Basis des über den Ermittlungszeitraum ermittelten Energieverbrauches ermittelt die Datenverarbeitungsvorrichtung 16 dann einen von dem Energieverbrauch erzeugten CO₂-Ausstoß.

Die Datenverarbeitungsvorrichtung 16 ist ferner dazu ausgebildet, Maßnahmen 20 zu ermitteln, welche eine Verringerung des CO₂-Ausstoßes bei der Energieversorgung des Gebäudes 10 bewirken. Die Ermittlung der Maßnahmen 20 erfolgt dabei unter Verwendung von Verfahren der künstlichen Intelligenz, insbesondere des maschinellen Lernens. Die ermittelten Maßnahmen 20 können beispielsweise Maßnahmen 20 sein, welche eine Energieerzeugungsvorrichtung 21, bevorzugt eine Wärmeerzeugungsvorrichtung 22, des Gebäudes 10 betreffen. Beispielsweise kann die ermittelte Maßnahme 20 eine Sanierung oder einen Austausch einer Komponente 23 der Energieerzeugungsvorrichtung 21 bzw. der Wärmeerzeugungsvorrichtung 22 betreffen. Die Maßnahme kann den Vorschlag enthalten, einen Heizkessel 24 auszutauschen.

Die Maßnahmen 20 werden in der Ausführungsform nach Fig. 1 an einen Nutzer 25, beispielsweise einen Gebäudeeigentümer, übermittelt und auf einem Smartphone 26 ausgegeben. Auf dem Smartphone 26 können dem Nutzer 25 neben den Maßnahmen 20 die CO₂-Bilanz, der Energieverbrauch, Benchmarks und Feedbacks zu seinem Verbrauchsverhalten übermittelt werden.

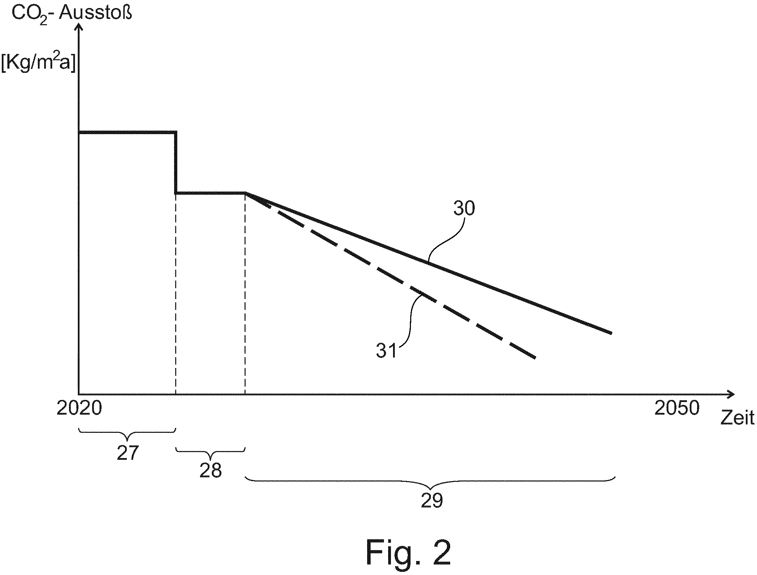

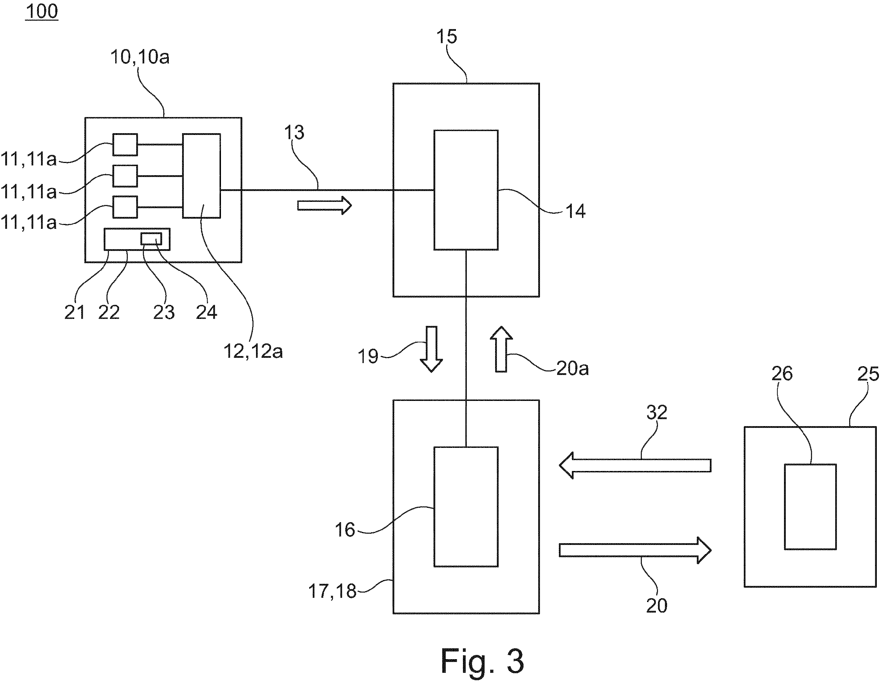

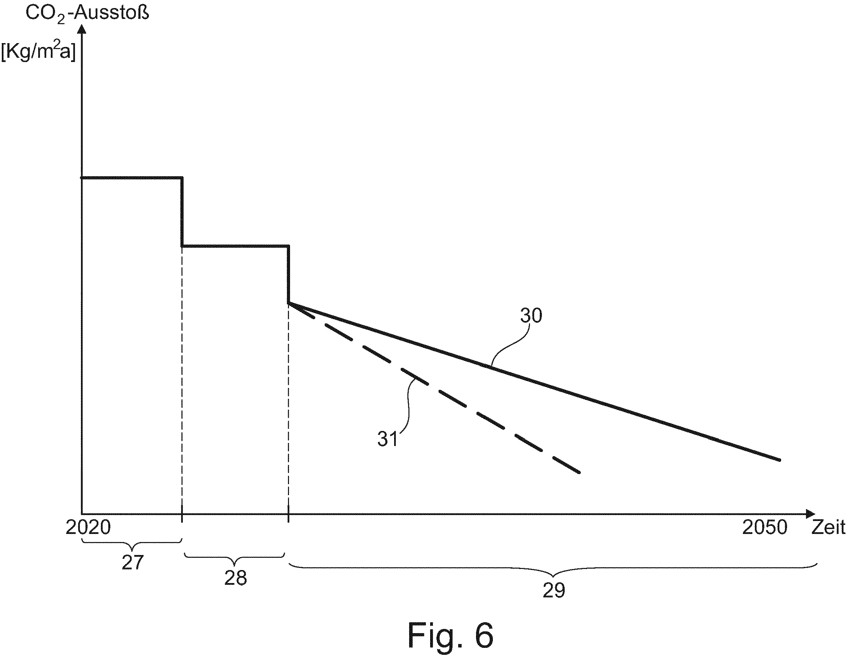

Fig. 2 und 6 zeigen zeitliche Verläufe des CO₂-Ausstoßes des Gebäudes 10 und wie mittels des Systems 100 der CO₂-Ausstoß verringert werden kann. In einer ersten Phase 27 findet bevorzugt vor Nutzung des Systems 100 eine Sanierung der Gebäudehülle des Gebäudes 10 statt. Beispielsweise können Wärmedämmmaßnahmen durchgeführt werden. Durch die vorgenommenen Dämmmaßnahmen sinkt der CO₂-Ausstoß ab. Da aufgrund der Sanierung des Gebäudes 10 die Energieversorgungsvorrichtung 21, beispielsweise der Heizkessel 24, des nun sanierten Gebäudes 10 überdimensioniert ist, sind noch weitere Einsparpotenziale für den CO₂-Ausstoß unerschlossen. In der auf die erste Phase 27 der Sanierung folgenden zweiten Phase 28 wird das System 100 eingesetzt. Insbesondere ermittelt die Datenverarbeitungsanlage 16 Maßnahmen 20, mit deren Umsetzung der CO₂-Ausstoß verringert werden kann, ohne den Komfort für den Nutzer 25 zu verringern. Die in der zweiten Phase 28 ermittelten Maßnahmen 20 betreffen dabei insbesondere die Sanierung oder den Austausch von Komponenten 23 der Energieerzeugungsvorrichtung 21, insbesondere der Wärmeerzeugungsvorrichtung 22. In manchen Fällen können die Maßnahmen 20 neben dem Austausch des Heizkessels 24 auch die Installation eines Blockheizkraftwerks oder einer Photovoltaikanlage betreffen. Dabei kann, wie in Fig. 6 gezeigt, durch die Sanierung oder den Austausch von Komponenten 23 der Energieerzeugungsvorrichtung 21 nach Ende der zweiten Phase 28 eine weitere Reduktion des CO₂-Ausstoßes erzielt werden. Nach Durchführung der Sanierungsmaßnahmen an der Energieversorgungsvorrichtung 21 am Ende der zweiten Phase 28 ermittelt das System 100 in der darauf folgenden dritten Phase 29 weiterhin den CO₂-Ausstoß auf Basis des von den Messdatenaufnehmern 10 ermittelten Energieverbrauchs. In der dritten Phase 29 können weitere Einsparpotenziale insbesondere durch eine Veränderung des Verbrauchsverhaltens des Nutzers 25 realisiert werden. So kann die Datenverarbeitungsvorrichtung 16 in der dritten Phase 29 dem Nutzer 25 des Gebäudes 10 Maßnahmen 20 unterbreiten, mit welchen dieser durch Umstellung seines Verhaltens den CO₂-Ausstoß des Gebäudes 10 weiter verringern kann. Diese Maßnahmen 20 können in einer optimierten Nutzung der Wärmeerzeugungsvorrichtung 22 für die Beheizung und Warmwasserbereitung bestehen. Während der dritten Phase 29 kann der CO₂-Ausstoß somit gemäß der oberen Linie 30 weiterhin kontinuierlich verringert werden. Eine noch weitere Reduzierung des CO₂-Ausstoßes während der dritten Phase 29 gemäß der unteren Linie 31 kann notwendig werden, wenn eine gesetzliche Deckelung des CO₂-Ausstoßes, beispielsweise nach den Vorgaben des Bundesklimaschutzgesetzes, vorgesehen ist. Die Erfüllung der gesetzlichen Vorgaben mittels des Systems 100 wird anhand der Fig. 3 näher erläutert.

In der Fig. 3 wird eine Ausführung des System 100 gezeigt, mit welcher die sich durch eine gesetzliche Deckelung des CO₂-Ausstoßes ergebenden höheren Anforderungen gemäß der unteren Linie 31 in der dritten Phase 29 nach Fig. 2 erfüllt werden können. Das System 100 nach Fig. 3 entspricht im Wesentlichen dem System 100 nach Fig. 1. Wiederum wird ein Energieverbrauch von als Smartmeter 11a ausgebildeten Messdatenaufnehmer 11 in einem sanierten Gebäude 10 ermittelt und über ein Smartmeter-Gateway 12a und das Internet 13 an ein Rechenzentrum 14 eines Messstellendienstleisters 15 übermittelt. Der Messstellendienstleister 15 übermittelt die Verbrauchsdaten 19 an die Datenverarbeitungsvorrichtung 16, welche gestützt auf Verfahren der künstlichen Intelligenz auf Basis des ermittelten Energieverbrauches einen CO₂-Ausstoß sowie Maßnahmen 20 ermittelt, mit welchen der CO₂-Ausstoß verringert werden kann. Die Maßnahmen 20 können zum einen wie bereits in der Fig. 1 an einen Nutzer 25 übermittelt werden, welchem auf einem Smartphone 26 Vorschläge für eine Änderung des Verbrauchsverhaltens angezeigt werden.

Stellt die Datenverarbeitungsvorrichtung 16 fest, dass für einen Zeitraum, beispielsweise einen Abrechnungszeitraum von einem Monat, die gesetzliche Obergrenze des CO₂-Ausstoßes nicht eingehalten werden kann, so kann die Datenverarbeitungsvorrichtung 16 als Maßnahme 20a ermitteln, dass eine Veränderung des Energiemixes oder eine Umstellung der Energiebezugsquellen für das Gebäude 10 notwendig ist. In diesem Fall kann die Datenverarbeitungsvorrichtung 16 die diesbezüglichen Maßnahmen 20a, welche beispielsweise eine Umstellung auf "grünen Strom" umfasst, dem Messstellendienstleister 15 übermitteln. Dieser sorgt dafür, dass von einem Energieerzeuger 18 ein entsprechendes Kontingent an grünem Strom bereitgestellt wird. Durch die zumindest temporäre Verwendung von grünem Strom für die Energieversorgung des Gebäudes 10 kann die gesetzliche Obergrenze für den CO₂-Ausstoß eingehalten werden. Der Messstellendienstleister 15 übernimmt üblicherweise auch die Endkundenabrechnung für die Energieversorgung des Gebäudes 10.

Über das Smartphone 26 kann der Nutzer 25 der Datenverarbeitungsvorrichtung 16 zudem Änderungen von Stammdaten 32 mitteilen. Beispielsweise können eine Änderung der Anzahl der Gebäudebewohner, bauliche Änderungen oder ähnliches an die Datenverarbeitungsvorrichtung 16 übermittelt werden, welche daraufhin diese geänderten Informationen für die Ermittlung der Maßnahmen 20 zur Verringerung des CO₂-Ausstoßes verwendet.

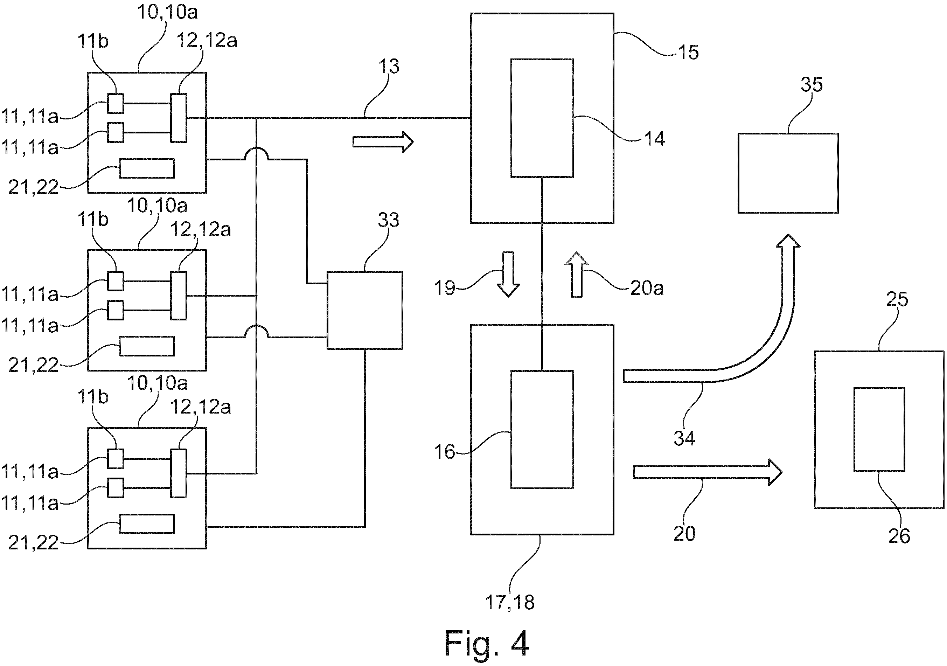

Fig. 4 zeigt eine weitere Ausgestaltung des Systems 100 zur Verringerung des CO₂-Ausstoßes bei der Energieversorgung von Gebäuden 10. Das System 100 nach Fig. 4 umfasst ebenfalls als Smartmeter 11a ausgebildete Messdatenaufnehmer 11, welche jedoch in mehreren Gebäuden 10 angeordnet sind. Für jedes der Gebäude 10 ermitteln die Smartmeter 11a Daten zum Energieverbrauch des jeweiligen Gebäudes 10, welche über ein jeweiliges Smartmeter-Gateway 12a und das Internet 13 an den Messstellendienstleister 15 übermittelt werden. Die gesammelten Verbrauchsdaten 19 der mehreren Gebäude 10 werden von dem Messstellendienstleiter 15 an die Datenverarbeitungsvorrichtung 16 des Systems 100 übermittelt, welche auf Basis der über den Ermittlungszeitraum ermittelten Energieverbräuche einen CO₂-Ausstoß und Maßnahmen 20, 20a ermittelt, welche zu einer Verringerung des CO₂-Ausstoßes bei der Energieversorgung der mehreren Gebäude 10 führt. Die von der Datenverarbeitungsvorrichtung 16 ermittelten Maßnahmen 20, 20a können dabei, wie vorstehend beschrieben Sanierungsmaßnahmen der einzelnen Energieerzeugungsvorrichtungen 21 oder Wärmeerzeugungsvorrichtungen 22 der jeweiligen Gebäude 10 oder eine Änderung des Verbrauchsverhaltens der Nutzer 25 betreffen. Ferner können die Maßnahmen 20a eine Umstellung der Energieversorgung auf "grünen Strom" betreffen. Darüber hinaus ist es auch möglich, dass die Datenverarbeitungsvorrichtung 16 Maßnahmen 20 ermittelt, welche von dem Energieerzeuger 18 umgesetzt werden können. Beispielsweise kann die Datenverarbeitungsvorrichtung 16 die Bereitstellung einer zentralen Energieerzeugungsvorrichtung oder Wärmeerzeugungsvorrichtung für die mehreren Gebäude 10 vorschlagen. Beispielsweise könnten die vorgeschlagenen Maßnahmen 20 die Bereitstellung oder Sanierung eines zentralen Blockheizkraftwerks 33 betreffen. Derartige Maßnahmen sind insbesondere dann vorteilhaft, wenn der Energieerzeuger 18 ein kommunaler Energieerzeuger ist. Durch die zentrale Energieversorgung mit Wärme und Strom der mehreren Gebäude 10 können weitere CO₂-Einsparpotanziale realisiert werden. In diesem Fall ist es vorteilhaft, wenn mindestens einer der Messdatenaufnehmer 11 ein Wärmemengenmessdatenaufnehmer 11b ist. Bevorzugt erfolgt dann die Inrechnungstellung der gelieferten Energie auf Basis der zur Beheizung oder Warmwasserbereitung der jeweiligen Gebäude 10 benötigten Wärmemenge. Die durch den verringerten Einsatz von Primärenergie erzielten Kostenvorteile können von dem Energieerzeuger 18 zur Gewinnoptimierung genutzt werden. Aus Sicht der Nutzer 25 der Gebäude 10 erfolgt die Abrechnung der Energieversorgung transparent über die genutzte Wärmemenge.

Darüber hinaus ist in dem insbesondere für den Kommunalbereich geeigneten System 100 nach Fig. 4 vorgesehen, dass die Datenverarbeitungsvorrichtung 16 weitere Informationen 34 ermittelt, welche für Dritte 35 interessant sind. Bei den Dritten 35 kann es sich beispielsweise um ein Bauamt, ein Umweltamt, einen Kämmerer der Gemeinde oder um einen Hausmeister handeln. Die Informationen 34 können zur Erstellung von Energieausweisen oder zur Verifizierung eines Sanierungserfolges der Gebäude 10 beziehungsweise der Energieerzeugungsvorrichtungen 21 der Gebäude 10 dienen. Darüber hinaus können die Informationen 34 eine CO₂-Bilanz, einen Energiebericht, aktuelle Energiekosten, eine Jahreshochrechnung und Benchmarks betreffen. Ferner können die Informationen Alarmmeldungen und Grenzwertverletzungen betreffen, welche beispielsweise an einen Hausmeister übermittelt werden.

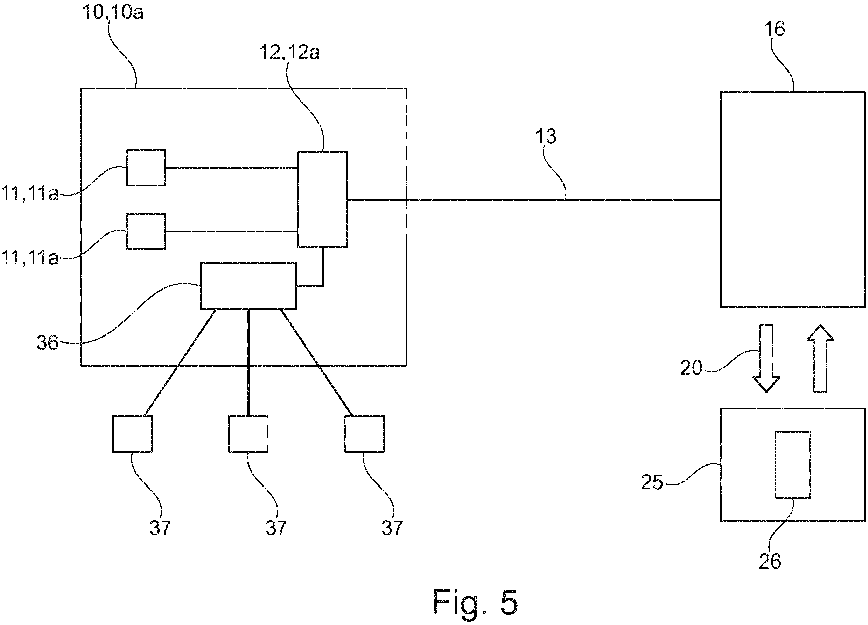

Fig. 5 zeigt ein Gebäude 10, 10a, bei welchem es sich um ein Gebäude 10, 10a gemäß einer der Ausführungsformen der Fig. 1, 3 und 4 handeln kann. Das Gebäude 10, 10a umfasst neben den als Smartmeter 11a ausgebildeten Messdatenaufnehmern 11 und dem Gateway 12, bzw. dem Smartmeter-Gateway 12a, eine Ladestation 36, welche Steckdosen 37 für das Laden von Hybridelektrokraftfahrzeugen oder batterieelektrischen Fahrzeugen aufweist. Die Ladestation 36 tauscht über das Gateway 12 und das Internet 13 mit der Datenverarbeitungsvorrichtung 16 Daten aus. Über ein Smartphone 26 kann ein Nutzer 25 eine Ladedauer oder eine Strommenge für sein Hybridelektrokraftfahrzeug oder batterieelektrisches Fahrzeug buchen. Zur Verringerung des CO₂-Ausstoßes kann die Datenverarbeitungsvorrichtung 16, gegebenenfalls alternativ auch eine in der Ladestation 36 angeordnete weitere Datenverarbeitungsvorrichtung, als Maßnahme ermitteln, dass eine Umstellung auf CO₂-neutralen Strom, sogenannten grünen Strom, vorteilhaft ist. Die Datenverarbeitungsvorrichtung 16 oder die in der

Ladestation 36 angeordnete weitere Datenverarbeitungsvorrichtung kann dann automatisch eine Umstellung auf den CO₂-neutralen Strom für den Ladevorgang der Fahrzeuge veranlassen. Dabei kann die Datenverarbeitungsvorrichtung 16 oder die die in der Ladestation 36 angeordnete weitere Datenverarbeitungsvorrichtung auch das Angebot und die Nachfrage nach CO₂-neutralen Strom berücksichtigen. Alternativ ist es auch möglich, dass die Datenverarbeitungsvorrichtung 16 die Maßnahme 20 mit dem Vorschlag, auf CO₂-neutralen Strom umzustellen, dem Nutzer 25 auf das Smartphone 26 übermittelt. Der Nutzer 25 kann dann entscheiden, ob er eine Umstellung des Ladevorgangs auf CO₂-neutralen Strom wünscht. Dafür können dem Nutzer 25 die jeweils geltenden Preise für "normalen" Strom oder CO₂-neutralen Strom angezeigt werden. Über das Smartphone 26 können dem Nutzer 25 zudem Zeiträume angezeigt werden, in denen das Laden mit CO₂-neutralen Strom besonders günstig ist. Ferner kann der Nutzer über das Smartphone 26 eine bestimmte Strommenge nach kWh oder nach einem zu bezahlenden Gesamtbetrag buchen. Die an den Steckdosen 37 angeschlossenen Fahrzeuge werden von der Ladestation 36 gleichmäßig geladen. Dabei fragt die Ladestation 36 den Ladezustand der Fahrzeuge regelmäßig ab.

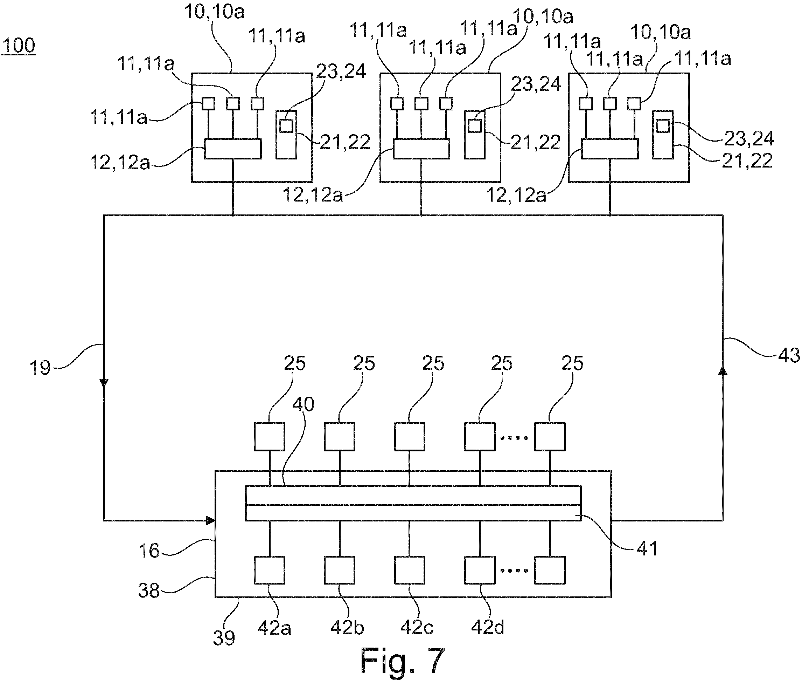

Fig. 7 zeigt eine weitere schematische Ansicht eines Systems 100 zur Verringerung eines CO₂-Ausstoßes. Die Datenverarbeitungsvorrichtung 16 ist als ein Server 38, insbesondere als Cloud-Server 39, ausgebildet und erhält über Smartmeter-Gateways 12a von Messdatenaufnehmern 11 aufgenommene Verbrauchsdaten 19. Der Server 38 umfasst ein Softwaremodul 40 für Grunddienste sowie eine Softwaremodul 41 für erweiterte Dienste. Das Softwaremodul 41 für erweiterte Dienste steht wiederum im Datenaustausch mit Anwendungsmodulen 42a bis 42d. Nutzer 25 können mit den Softwaremodulen 41, 42, 42a bis 42d interagieren, Anfragen stellen bzw. Informationen erhalten.

Ein erstes Anwendungsmodul 42a ist zur Berechnung der maximalen Leistung eines oder mehrerer Wärmeerzeugungsvorrichtungen 22 ausgebildet. Weiterhin werden in diesem Anwendungsmodul 42a eine maximal notwendige Vorlauftemperatur berechnet. Über den Anteil der Leistung für Warmwassererwärmung gibt das erste Anwendungsmodul 42a ebenfalls eine Aussage. Letztendlich wird dadurch auch eine Aussage über den Zustand der Gebäudehülle in Bezug auf die Dämmung darstellbar. In dem ersten Anwendungsmodul 42a wird die Wärmeerzeugung unter Berücksichtigung der evtl. vorhandenen Energiegewinnung aus Fotovoltaik, Abwärme, Energierückgewinnung, Solarthermieanlage usw. neu konfiguriert. Das erste Anwendungsmodul 42a beantwortet die Fragen, ob die Warmwasserbereitung elektrisch erfolgen kann, ob es günstiger ist, und bis zu welcher Außentemperatur, eine Wärmepumpe einzusetzen und wie ein Spitzenlastbedarf bei tieferen Außentemperaturen gedeckt werden kann.

Ein zweites Anwendungsmodul 42b ist zur Berechnung des optimalen Einsatzes einer Wärmepumpe in Abhängigkeit vom Verhältnis des Gaspreises zum Strompreis ausgebildet. Je mehr sich der Gaspreis dem Strompreis nähert umso wirtschaftlicher wird der Einsatz einer Wärmepumpe auch bei einer Leistungsziffer kleiner drei.

Ein drittes Anwendungsmodul 42c ist zur Steuerung des optimalen Einsatzes der Wärmepumpe ausgebildet. Hierfür wertet das Anwendungsmodul 42c unter anderem aus, wie groß ist aktuelle Liefermöglichkeit von grünem bzw. CO₂-neutralem Strom ist, bzw. wie das Verhältnis von Angebot und Nachfrage ist. Die Regelung erfolgt im Echtzeitbetrieb. Immer wenn grüne bzw. CO₂-neutrale Energie im Überschuss vorhanden ist, kann ein Tarifwechsel für den Energiebezug erfolgen.

Ein viertes Anwendungsmodul 42d implementiert eine Komfortwahl. Wenn ein Nutzer bspw. den Komfortlevel "10" wählt, heißt das, dass die eingestellte Raumsolltemperatur mit konventioneller Energie erreicht werden soll. Je kleiner der gewählte Komfortlevel ist, desto mehr findet das vorhergesagte Angebot an grüner bzw. CO₂-neutraler Energie Berücksichtigung. Das kann bedeuten, dass wenn morgens 10:00 Uhr zum Beispiel die Windenergie stark zunimmt der Start der Heizung von ehemals 8:00 Uhr auf 10:00 Uhr verschoben wird. Hierdurch kann zwar der Komfort für den Nutzer nachlassen, aber das Angebot an grüner bzw. CO₂-neutraler Energie wird genutzt, anstatt mit schwarzer Energie das Komfortziel zu erreichen.

Der Server 38 sendet dann Steuerbefehle 43 an die Smartmeter-Gateways 12a, welche diese, z.B einen Tarifwechsel, umsetzen.

### Liste der Bezugszeichen

- 100: System zur Verringerung eines CO₂-Ausstoßes
- 10: Gebäude
- 10a: Bestandsgebäude
- 11: Messdatenaufnehmer
- 11a: Smartmeter
- 11b: Wärmemengenmessdatenaufnehmer
- 12: Gateway
- 12a: Smartmeter-Gateway
- 13: Internet
- 14: Rechenzentrum
- 15: Messstellendienstleister
- 16: Datenverarbeitungsvorrichtung
- 17: Dienstleister
- 18: Energieerzeuger
- 19: Verbrauchsdaten

- 20: Maßnahme
- 20a: Maßnahme
- 21: Energieerzeugungsvorrichtung
- 22: Wärmeerzeugungsvorrichtung
- 23: Komponente
- 24: Heizkessel
- 25: Nutzer
- 26: Smartphone
- 27: Erste Phase
- 28: Zweite Phase
- 29: Dritte Phase

- 30: Obere Linie
- 31: Untere Linie
- 32: Stammdaten
- 33: Blockheizkraftwerk
- 34: Informationen
- 35: Dritter
- 36: Ladestation
- 37: Steckdose
- 38: Server
- 39: Cloud-Server

- 40: Softwaremodul
- 41: Softwaremodul
- 42a-d: Anwendungsmodule
- 43: Steuerbefehle

## Patentansprüche

1. System (100) zur Verringerung eines CO₂-Ausstoßes bei der Energieversorgung von Gebäuden (10, 10a), umfassend mindestens einen in einem Gebäude (10, 10a) angeordneten Messdatenaufnehmer (11, 11a, 11b) eingerichtet zur Ermittlung eines Energieverbrauchs, ferner umfassend eine Datenverarbeitungsvorrichtung (16), welche ausgebildet ist, für einen Ermittlungszeitraum auf Basis eines ermittelten Energieverbrauchs einen CO₂-Ausstoß zu ermitteln, **dadurch gekennzeichnet, dass** die Datenverarbeitungsvorrichtung (16) ausgebildet ist, Maßnahmen (20, 20a) zu ermitteln, welche eine Verringerung des CO₂-Ausstoßes bei der Energieversorgung des Gebäude (10, 10a) bewirken.

2. System (100) nach Anspruch 1, **dadurch gekennzeichnet, dass** Messdatenaufnehmer (11, 11a, 11b) in mehreren Gebäuden (10, 10a) angeordnet sind, welche zur Ermittlung eines Energieverbrauchs eingerichtet sind, wobei die Maßnahmen (20, 20a) eine Verringerung des CO₂-Ausstoßes bei der Energieversorgung der mehreren Gebäude (10, 10a) bewirken, und/oder dass die Maßnahmen (20, 20a) bei einem im Wesentlichen unveränderten Wärmeverbrauch eine Verringerung des CO₂-Ausstoßes bewirken.

3. System (100) nach einem der vorgenannten Ansprüche, **dadurch gekennzeichnet, dass** das Gebäude (10, 10a) ein saniertes Gebäude (10, 10a) ist, und/oder dass das Gebäude (10, 10a) eine sanierte Gebäudehülle aufweist, und/oder dass der Energieverbrauch ein Brennstoffverbrauch und/oder ein Stromverbrauch und/oder ein Wärmeverbrauch ist.

4. System (100) nach einem der vorgenannten Ansprüche, **dadurch gekennzeichnet, dass** sich die Maßnahmen (20, 20a) auf Maßnahmen (20) betreffend eine Energieerzeugungsvorrichtung (21), bevorzugt einer Wärmeerzeugungsvorrichtung (22), und/oder auf Maßnahmen (20) betreffend ein Verbrauchsverhalten eines Nutzers (25) beziehen, wobei bevorzugt die Maßnahmen (20) eine Neuinstallation und/oder eine Sanierung und/oder einen Austausch, bevorzugt einer Komponente (23), der Energieerzeugungsvorrichtung (21), weiter bevorzugt der Wärmeerzeugungsvorrichtung (22), betreffen.

5. System (100) nach Anspruch 4, **dadurch gekennzeichnet, dass** die Energieerzeugungsvorrichtung (21) eine Energieerzeugungsvorrichtung (21) des Gebäudes (10, 10a) oder eine Energieerzeugungsvorrichtung (21) für mehrere Gebäude (10, 10a) ist.

6. System (100) nach einem der vorgenannten Ansprüche, **dadurch gekennzeichnet, dass** die Datenverarbeitungsvorrichtung (16) eingerichtet ist, für die Ermittlung des CO₂-Ausstoßes und/oder der Maßnahmen (20, 20a) Verfahren der Künstlichen Intelligenz, insbesondere des maschinellen Lernens, einzusetzen, und/oder dass die Datenverarbeitungsvorrichtung (16) eingerichtet ist, für die Ermittlung des CO₂-Ausstoßes und/oder der Maßnahmen (20, 20a) regelbasierte Entscheidungsverfahren einzusetzen.

7. System (100) nach einem der vorgenannten Ansprüche, **dadurch gekennzeichnet, dass** die Maßnahmen (20) die Bereitstellung und/oder Sanierung einer zentralen Energieerzeugungsvorrichtung (21) und/oder Wärmeerzeugungsvorrichtung (22) betreffen, und/oder dass die Maßnahmen (20a) eine Veränderung eines Energiemixes für das Gebäude (10, 10a) betreffen und/oder dass die Maßnahmen (20a) eine Umstellung der Energiebezugsquellen für das Gebäude (10, 10a) betreffen, wobei bevorzugt die Maßnahmen (20a) eine, bevorzugt temporäre, Umstellung auf CO₂-neutralen Strom und/oder eine Umstellung auf CO₂-neutrale Wärme und/oder eine Umstellung auf CO₂-neutralen Brennstoff betreffen.

8. System (100) nach einem der vorgenannten Ansprüche, **dadurch gekennzeichnet, dass** die Datenverarbeitungsvorrichtung (16) ausgebildet ist, die Maßnahmen (20, 20a) einem Energieerzeuger (18), und/oder einem Energielieferanten, und/oder einem Netzbetreiber und/oder einem Messstellendienstleister (15) zu übermitteln, wobei bevorzugt der Energieerzeuger (18), und/oder der Energielieferant, und/oder der Netzbetreiber und/oder der Messstellendienstleister (15) die Maßnahmen (20, 20a) umsetzt, und/oder dass die Datenverarbeitungsvorrichtung (16) ausgebildet ist, die Maßnahmen (20, 20a) dem Nutzer (25), insbesondere einem Gebäudeeigentümer und/oder einem Gebäudenutzer, zu übermitteln, wobei die Datenverarbeitungsvorrichtung (16) ausgebildet ist, die Maßnahmen (20, 20a) über eine Software, bevorzugt über eine auf einem mobilen Datenverarbeitungsgerät, insbesondere einem Smartphone (26) oder einem Tablet, ausführbare Software, zu übermitteln.

9. Verfahren zur Verringerung eines CO₂-Ausstoßes bei der Energieversorgung von Gebäuden (10, 10a), insbesondere durchführbar unter Verwendung eines Systems (100) nach einem der vorgenannten Ansprüche, wobei in einem Gebäude (10, 10a) mindestens ein Messdatenaufnehmer (11, 11a, 11b) eingerichtet zur Ermittlung eines Energieverbrauchs vorgesehen ist, wobei eine Datenverarbeitungsvorrichtung (16) für einen Ermittlungszeitraum auf Basis eines ermittelten Energieverbrauchs einen CO₂-Ausstoß ermittelt, **dadurch gekennzeichnet, dass** die Datenverarbeitungsvorrichtung (16) Maßnahmen (20, 20a) ermittelt, welche eine Verringerung des CO₂-Ausstoßes bei der Energieversorgung des Gebäudes (10, 10a) bewirken.

10. Verfahren nach Anspruch 9, **dadurch gekennzeichnet, dass** in mehreren Gebäuden (10, 10a) Messdatenaufnehmer (11, 11a, 11b) eingerichtet zur Ermittlung eines Energieverbrauchs vorgesehen sind, wobei die Maßnahmen (20, 20a) eine Verringerung des CO₂-Ausstoßes bei der Energieversorgung der mehreren Gebäude (10, 10a) bewirken.

11. Verfahren nach Anspruch 9 oder 10, **dadurch gekennzeichnet, dass** die Maßnahmen (20, 20a) bei einem im Wesentlichen unveränderten Wärmeverbrauch eine Verringerung des CO₂-Ausstoßes bewirken, und/oder dass das Gebäude (10, 10a) ein saniertes Gebäude (10, 10a) ist, und/oder dass das Gebäude (10, 10a) eine sanierte Gebäudehülle aufweist, und/oder dass der Energieverbrauch ein Brennstoffverbrauch und/oder ein Stromverbrauch und/oder ein Wärmeverbrauch ist, und/oder dass sich die Maßnahmen (20, 20a) auf Maßnahmen (20) betreffend eine Energieerzeugungsvorrichtung (21), bevorzugt einer Wärmeerzeugungsvorrichtung (22), und/oder auf Maßnahmen (20) betreffend ein Verbrauchsverhalten eines Nutzers (25) beziehen, wobei bevorzugt die Maßnahmen (20) eine Neuinstallation und/oder eine Sanierung und/oder einen Austausch, bevorzugt einer Komponente (23), der Energieerzeugungsvorrichtung (21), weiter bevorzugt der Wärmeerzeugungsvorrichtung (22), betreffen.

12. Verfahren nach einem der Ansprüche 9 bis 11, **dadurch gekennzeichnet, dass** die Datenverarbeitungsvorrichtung (16) für die Ermittlung des CO₂-Ausstoßes und/oder der Maßnahmen (20, 20a) Verfahren der Künstlichen Intelligenz, insbesondere des maschinellen Lernens, einsetzt, und/oder dass die Datenverarbeitungsvorrichtung (16) für die Ermittlung des CO₂-Ausstoßes und/oder der Maßnahmen (20, 20a) regelbasierte Entscheidungsverfahren einsetzt.

13. Verfahren nach einem der Ansprüche 9 bis 12, **dadurch gekennzeichnet, dass** die Maßnahmen (20, 20a) die Bereitstellung einer zentralen Energieerzeugungsvorrichtung (21) und/oder Wärmeerzeugungsvorrichtung (22) betreffen, und/oder dass die Maßnahmen (20a) eine Veränderung eines Energiemixes für das Gebäude (10, 10a) betreffen und/oder dass die Maßnahmen (20) eine Umstellung der Energiebezugsquellen für das Gebäude (10, 10a) betreffen, wobei bevorzugt die Maßnahmen (20a) eine, bevorzugt temporäre, Umstellung auf CO₂-neutralen Strom und/oder eine Umstellung auf CO₂-neutrale Wärme und/oder eine Umstellung auf CO₂-neutralen Brennstoff betreffen.

14. Verfahren nach einem der Ansprüche 9 bis 13, **dadurch gekennzeichnet, dass** die Maßnahmen (20, 20a) einem Energieerzeuger (18), und/oder einem Energielieferanten, und/oder einem Netzbetreiber und/oder einem Messstellendienstleister (15) übermittelt werden, wobei bevorzugt der Energieerzeuger (18), und/oder der Energielieferant, und/oder der Netzbetreiber und/oder der Messstellendienstleister (15) die Maßnahme (20, 20a) umsetzt, und/oder dass die Maßnahmen (20, 20a) dem Nutzer (25), insbesondere einem Gebäudeeigentümer und/oder einem Gebäudenutzer, übermittelt werden, wobei die Übermittlung der Maßnahmen (20, 20a) über eine Software, bevorzugt über eine auf einem mobilen Datenverarbeitungsgerät, insbesondere einem Smartphone (26) oder einem Tablet, ausführbare Software, erfolgt.

15. Verfahren nach einem der Ansprüche 9 bis 14, **dadurch gekennzeichnet, dass** der Messdatenaufnehmer (11, 11a, 11b) ein Wärmemengenmessaufnehmer (11b) ist, wobei bevorzugt eine Inrechnungstellung der Wärmeversorgung des Gebäudes (10, 10a) seitens eines Energieerzeugers (18), und/oder eines Energielieferanten, und/oder eines Netzbetreibers und/oder eines Messstellendienstleisters (15) auf Basis des Wärmeverbrauchs erfolgt, und/oder dass die Datenverarbeitungsvorrichtung (16) Informationen (34) für Dritte (35) ermittelt, wobei der Dritte (35) bevorzugt ein Bauamt, ein Umweltamt, ein Kämmerer oder ein Hausmeister ist.
